(19) **Europäisches Patentamt**

**European Patent Office**

**Office européen des brevets**

(11) **EP 0 852 422 B1**

(12) **EUROPÄISCHE PATENTSCHRIFT**

(45) Veröffentlichungstag und Bekanntmachung des Hinweises auf die Patenterteilung:
**27.03.2002 Patentblatt 2002/13**

(51) Int Cl.7: **H02M 3/158**, H02M 1/14

(21) Anmeldenummer: **97122688.1**

(22) Anmeldetag: **22.12.1997**

(54) **Tiefsetzsteller**

Step-down converter

Convertisseur abaisseur

(84) Benannte Vertragsstaaten:
**AT CH DE FR GB IT LI**

(30) Priorität: **03.01.1997 DE 19700100**

(43) Veröffentlichungstag der Anmeldung:
**08.07.1998 Patentblatt 1998/28**

(73) Patentinhaber: **Moosbauer, Peter, Dipl.-Ing.**
**82377 Penzberg (DE)**

(72) Erfinder: **Moosbauer, Peter, Dipl.-Ing.**
**82377 Penzberg (DE)**

(74) Vertreter: **Leske, Thomas, Dr. et al**
**Patent- und Rechtsanwälte**
**Bardehle - Pagenberg - Dost**
**Altenburg - Geissler - Isenbruck**
**Galileiplatz 1**
**81679 München (DE)**

(56) Entgegenhaltungen:
**EP-A- 0 060 020**          **WO-A-89/00786**
**DE-C- 4 116 756**          **US-A- 4 667 173**

- **RASTOGI ET AL: "three-phase sinusoidal current rectifier with zero-current switching" NINTH ANNUAL APPLIED POWER ELECTRONICS CONFERENCE AND EXPOSITION, Bd. 2, 13. - 17. Februar 1994, Seiten 718-724, XP000467385 orlando**
- **PATENT ABSTRACTS OF JAPAN vol. 11, no. 240 (E-529), 6. August 1987 & JP 62 053171 A (MITSUBISHI), 7. März 1987**
- **PATENT ABSTRACTS OF JAPAN vol. 14, no. 85 (E-890), 16. Februar 1990 & JP 01 295664 A (FUJI ELECTRIC), 29. November 1989**

**Beschreibung**

Die Erfindung bezieht sich auf einen von einer Gleich- oder Wechselspannungsquelle gespeisten Tiefsetzsteller zur Erzeugung von gegen Erde gleichtaktripplefreier Spannung an seinen Ausgängen.

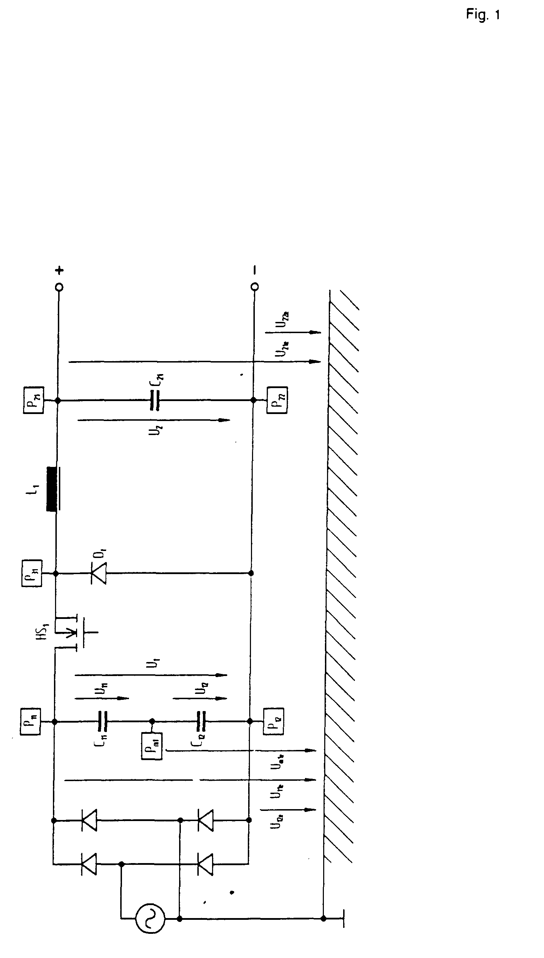

Bekannte Schaltungen arbeiten, wie in Fig. 1 dargestellt, mit einem Halbleiterschalter $HS_1$, einer Freilaufdiode $D_1$ und einer Speicherdrossel $L_1$. Dabei wird über eine Steuer- und Regelschaltung der Halbleiterschalter periodisch ein- und ausgeschaltet. Aus dem eingestellten Tastverhältnis ergibt sich die Ausgangsspannung bzw. der Ausgangsstrom.

Derartige bekannte Schaltungen besitzen den Nachteil, daß die Ausgangsklemmen mit erheblicher unsymmetrischer Störspannung gegen Erde beaufschlagt sind. Der Hauptanteil der Störspannung resultiert aus der an den Netzladekondensatoren entstehenden HF-Ripplespannung aufgrund des mit der Taktfrequenz periodisch entnommenen Stromes in Verbindung mit den Netzimpedanzen.

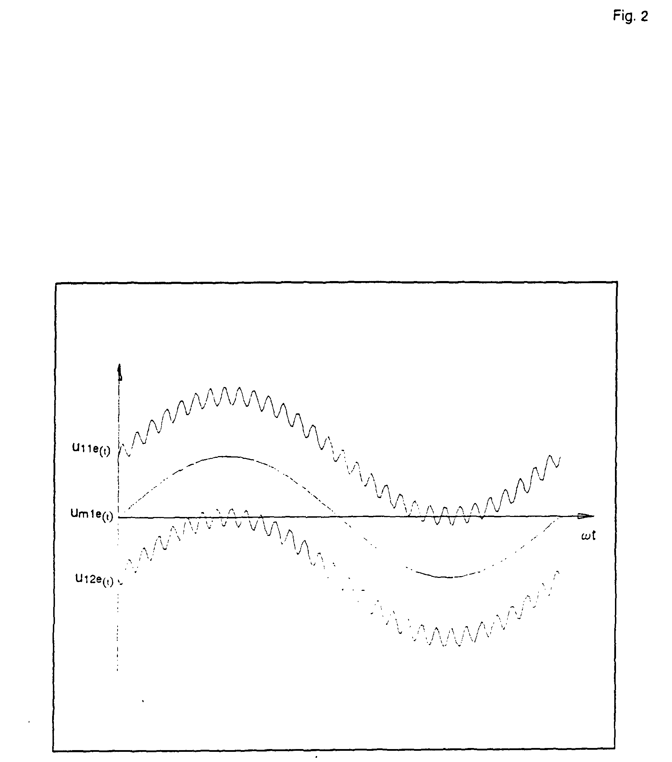

Da die Netzspannung erdbezogen ist, tritt die HF-Ripplespannung an den Punkten $P_{11}$ und $P_{12}$ symmetrisch gegen Erde auf. Der Mittelpunkt $P_{m1}$ zwischen den Netzladekondensatoren $C_{11}$ und $C_{12}$ ist, wie in Fig. 2 dargestellt, gegen Erde frei von HF-Ripplespannung.

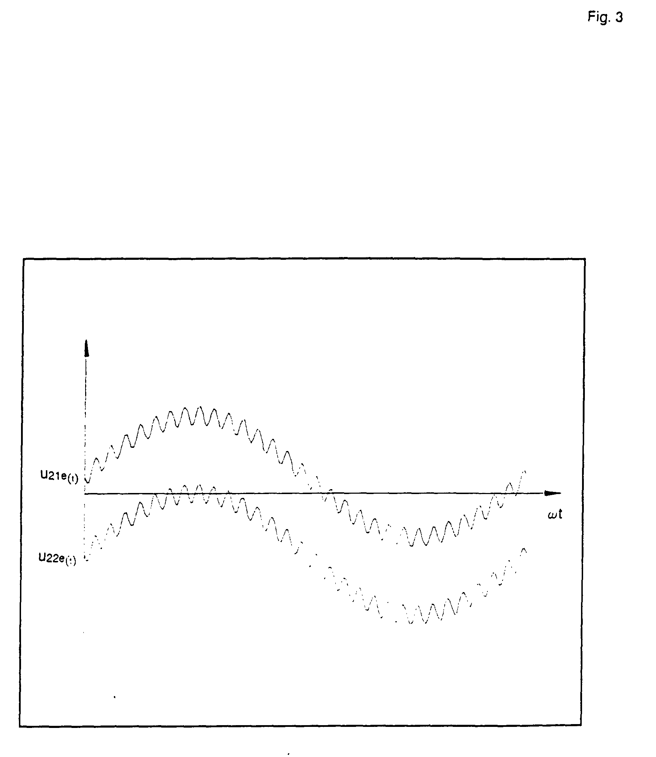

Aufgrund der Verbindung von Punkt $P_{12}$ mit Punkt$_{22}$ tritt die HF-Ripplespannung, hier jedoch als unsymmetrische HF-Störspannung, auch an den Ausgangsklemmen $P_{22}$ und $P_{21}$ gegen Erde auf, wie aus Fig. 3 ersichtlich ist.

Im Zusammenhang mit den HF-Ripple-Störspannungen bedeutet "symmetrisch zur Erde", daß die HF-Ripple-Störspannungen auf dem positiven bzw. negativen Zweig im Gegentakt zueinander schwingen (vgl. Fig. 2). "Unsymmetrisch zur Erde" bedeutet hierbei, daß die beiden HF-Ripple-Störspannungen im Gleichtakt zueinander schwingen (vgl. Fig. 3).

Die Amplitude der Störspannung ist direkt abhängig von der Größe der Netzladekondensatoren. Ist die Forderung nach einem möglichst günstigen Leistungsfaktor einzuhalten, so dürfen nur kleine Netzladekondensatoren eingesetzt werden. Dies wiederum bedingt an den Ausgangsklemmen eine hohe unsymmetrische HF-Störspannung.

Weiterhin nachteilig ist, daß insbesondere bei größeren Speicherdrosseln aufgrund der Speicherdrossel-Wicklungskapazitäten gegen Erde in Verbindung mit dem an der Speicherdrossel mit der Taktfrequenz periodisch und mit hoher Flankensteilheit am Punkt $P_{31}$ auftretenden Rechteck-Spannungshub in Höhe der Netz-Scheitelspannung erhebliche HF-Störströme gegen Erde fließen.

Es hat sich nun gezeigt, daß insbesondere bei Geräten mit höheren Leistungen diese HF-Störspannungen und HF-Störströme mit Funkentstörmitteln erträglichen Aufwandes nicht auf einen den Vorschriften und den gestellten Erfordernissen entsprechenden niedrigen Wert zu bringen sind. Weiter erschwerend ist, daß bei Geräten mit einer netzseitigen Steckverbindung aufgrund gesetzlicher Sicherheitsvorschriften die wertmäßige Größe der einzusetzenden Funkentstörkondensatoren wegen des auftretenden Ableitstromes begrenzt ist.

Ein weiterer Nachteil ist, daß die zum Betrieb erforderliche und gewöhnlich auf Ausgangspotential liegende Steuer- und Regelschaltung, die üblicherweise über eine Potentialtrennung Bezug zu einer erdpotentialnahen Schnittstelle besitzt, ebenfalls gegen Erde mit der HF-Ripplespannung beaufschlagt ist und somit die Steuer- und Regelschaltung in erheblichem Maße ungünstig beeinflussende HF-Störströme sowohl kapazitiv über die potentialgetrennte erdpotentialnahe Schnittstelle, als auch direkt über die Raumkapazitäten zur Erde fließen.

Ein weiterer Nachteil ist, daß sich die Gleichspannung an der Ausgangsseite des Tiefsetzstellers nicht symmetrisch zum Mittelpunkt der Eingangsseite verhält, sondern unabhängig von ihrem Wert, wie das Potential der Gleichspannung an der Eingangsseite. Dies bedingt, daß die Ausgangsseite bezüglich der Isolation gegen Erde den gleichen Ansprüchen genügen muß wie die Eingangsseite mit der Netzscheitelspannung.

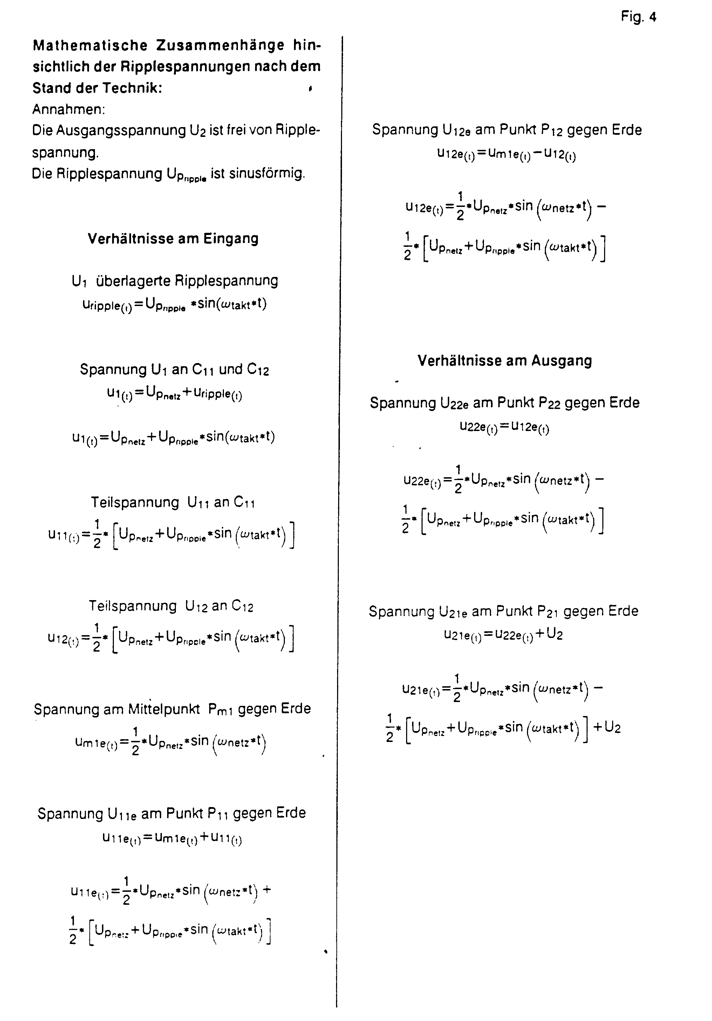

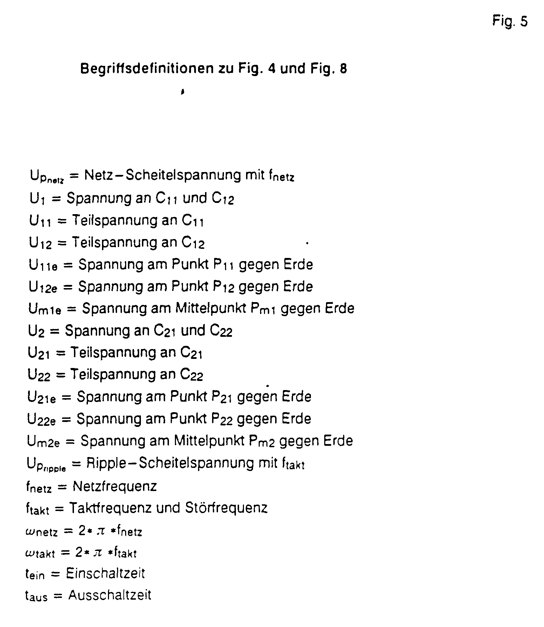

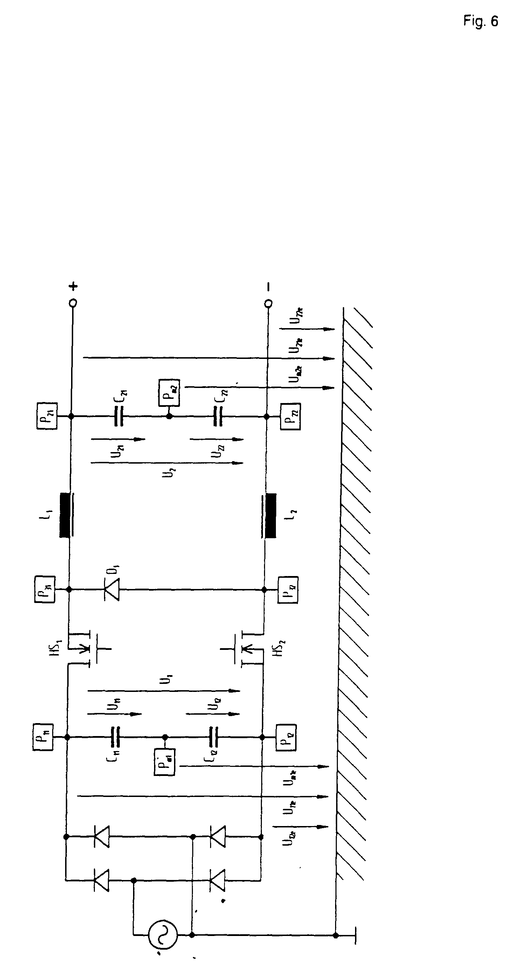

Fig. 1 zeigt eine Schaltung für einen Tiefsetzsteller nach dem Stand der Technik, Fig. 4 die mathematischen Zusammenhänge hinsichtlich der HF-Ripplespannungen mit Begriffsdefinitionen in Fig. 5, Fig. 2 und Fig. 3 eine grafische Darstellung der Ein- und Ausgangsspannungen im Bezug zur Erde für einen Tiefsetzsteller nach dem Stand der Technik.

Demgegenüber liegt der Erfindung die Aufgabe zugrunde, einen Tiefsetzsteller zu schaffen, welcher ein verbessertes Störspannungsverhalten an den Ausgängen aufweist.

Diese Aufgabe wird durch einen Tiefsetzsteller gemäß Anspruch 1 gelöst. Vorteilhafte Weiterbildungen sind in den Unteransprüchen definiert.

Aus AT 390 856 ist zwar eine Schaltung zur Gleichspannungswandlung bekannt, bei welcher die Spannungsfestigkeit eines Gleichspannungswandlers dadurch erhöht wird, daß zwei elektronische Schalter in zwei Zweigen in Serie geschaltet werden. Hierbei sind die beiden Schalter über einen kapazitiven Spannungsteiler aus eingangsseitig zwei Koppelkondensatoren und ausgangsseitig zwei Zwischenkreiskondensatoren mit jeweils gleicher Kapazität gekoppelt und die Verbindung der Koppelkondensatoren mit der Verbindung der Zwischenkreiskondensatoren verbunden. Anders als die vorliegende Erfindung betrifft diese Druckschrift einen Gleichspannungswandler für den kV-Hochspannungsbereich und befaßt sich mit dem Problem, eine Spannungsverschiebung zwischen den beiden Zweigen, welche durch unterschiedliche Bauelement-Toleranzen verursacht wird, zu vermeiden. Zwar stellt sich bei der offenbarten Schaltung ebenfalls eine Ripplespannungsfreiheit am Ausgang ein, jedoch ist die erfindungsgemäße Lehre nicht vorweggenommen oder auch nur angedeutet. So enthält diese Schrift keinen Hinweis auf die erfindungsgemäße Lehre, zur Erzeugung einer Ripple-freien Ausgangsspannung zwei Halbleiterschalter und zwei Spulen vorzusehen, wobei beide Halbleiterschalter im Gleichtakt geöffnet und geschlossen werden. Zudem enthält die dortige Schaltung Maßnahmen, die zur Lösung der Aufgabe der vorliegenden Erfindung gemäß der in Anspruch 1 der vorliegenden Erfindung nicht benötigt werden, insbesondere kapazitive eingangsseitige und ausgangsseitige Spannungsteiler sowie eine Reihenschaltung zweier gleicher Dioden zwischen den beiden Zweigen und ferner eine Mittelpunktsverbindung der Reihenschaltungen. Darüber hinaus lehrt die Druckschrift, daß die beiden Zweige sowie die Spannungsteiler symmetrisch dimensioniert sein müssen, worauf es bei der vorliegenden Erfindung jedoch nicht ankommt.

Aus JP 3-169259 (A) ist eine Schaltungsanordnung zur Entstörung des Ausgangs eines Schaltnetzteiles mit einem HF-Transformator bekannt, bei welcher die ausgangsseitige Wicklung des HF-Transformators in zwei Teilwicklungen geteilt und derart gestaltet ist, daß die Produkte aus Leitungskapazitäten und induzierten Spannungen der beiden Teilwicklungen sowie deren elektrostatische Kapazitäten einander gleich werden und sich aufheben. Diese Druckschrift gibt jedoch keinen Hinweis auf die erfindungsgenmäße Lehre.

Aus JP 2-211056 (A) ist ein Schaltnetzteil mit einem Transformator und einem Schalter bekannt, bei welchem HF-Störungen durch Vorsehen eines Kondensators an der sekundärseitigen Transformatorwicklung und der Erde reduziert werden. Auch diese Druckschrift gibt keinen Hinweis auf die erfindungsgemäße Lehre.

Aus WO 89/00786 ist ein Schaltnetzteil bekannt, bei welchem der Ausgang nicht durch transiente Spannungsfluktuationen am Eingang beeinflußt wird und bei welchem mindestens zwei doppelt geschaltete Schalteinheiten verwendet werden, die in Serie verbunden sind. Die Doppelschalter in der ersten Schalteinheit und die Doppelschalter in der zweiten Schalteinheit öffnen und schließen im Gegentakt zueinander, so daß zu keinem Zeitpunkt eine durchgehende elektrische Verbindung zwischen dem Ausgang der ersten Schalteinheit und dem Ausgang der zweiten Schalteinheit besteht. Die Ausgangsspannung wird mittels Steuerschaltungen konstant gehalten. Ein Hinweis auf die erfindungsgemäße Lehre gibt diese Druckschrift nicht.

Aus DE 41 16 756 C1 ist ein Schaltregler mit ausgangsseitiger Siebschaltung bekannt, bei welchem am Eingang und am Ausgang der Siebschaltung jeweils ein Signal abgegriffen wird, aus welchem ein Stellsignal für das Schaltregler-Stellglied abgeleitet wird. Es sind zwei steuerbare Stromquellen vorgesehen, die von den abgegriffenen Signalen gesteuert werden. Die Fußpunkte der Stromquellen sind im Sinne einer ODER-Verknüpfung auf den Pulsbreiten- oder Pulsfrequenzmodulator des Schaltreglers geführt. Ohne Verschlechterung der Siebwirkung der Siebschaltung soll ein gutes statisches und dynamisches Regelverhalten erreicht werden.

Aus "Ninth annual applied power electronics conference and exposition, Bd. 2, 13-17.02.1994, Seiten 718-724: Three-phase sinusoidal current rectifier with zero-curent switching" ist ein Dreiphasen-Gleichrichtungsschema mit nahezu sinusförmigen Zweigströmen bekannt.

Aus JP 62 053171 ist eine Stromversorgungseinheit für Kraftfahrzeuge bekannt, welche zwar zwei Halbleiter-Schaltelemente aufweist, diese jedoch zueinander im Gegentakt geöffnet und geschlossen werden. Ferner umfaßt die Einheit lediglich Drosseln in einem Zweig.

Die Erfindung wird anhand der Zeichnung näher erläutert.

In der Zeichnung zeigt:

| | |
|---|---|
| Fig. 1 | Schaltung eines Tiefsetzstellers nach dem Stand der Technik, |
| Fig. 2 | Spannungsverhältnisse im Bezug zur Erde am Eingang eines Tiefsetzstellers nach dem Stand der Technik, |
| Fig. 3 | Spannungsverhältnisse im Bezug zur Erde am Ausgang eines Tiefsetzstellers nach dem Stand der Technik, |
| Fig. 4 | mathematische Zusammenhänge hinsichtlich der Ripplespannungen bei einem Tiefsetzsteller nach dem Stand der Technik, |
| Fig. 5 | Begriffsdefinitionen zu Fig. 4 und Fig. 8, |
| Fig. 6 | einen erfindungsgemäßen Tiefsetzsteller mit zwei Speicherdrosseln, |
| Fig. 7 | einen erfindungsgemäßen Tiefsetzsteller mit einer Speicherdrossel mit zwei getrennten Wicklungen, |
| Fig. 8 | mathematische Zusammenhänge hinsichtlich der Ripplespannungen bei einem Tiefsetzsteller gemäß der Erfindung, |
| Fig. 9 | Spannungsverhältnisse im Bezug zur Erde am Eingang des erfindungsgemäßen Tiefsetzstellers, |
| Fig. 10 | Spannungsverhältnisse im Bezug zur Erde am Ausgang des erfindungsgemäßen Tiefsetzstellers, |

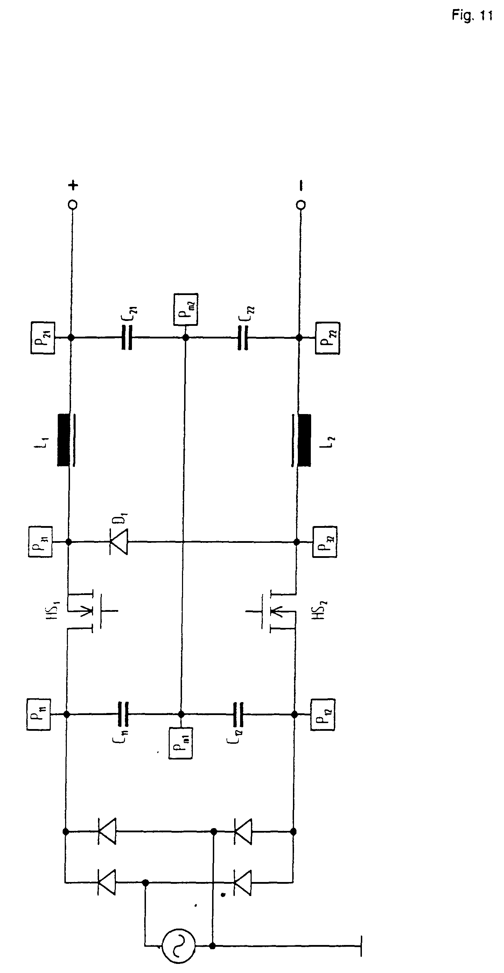

Fig. 11 bis 25    weitere Ausführungsformen eines Tiefsetzstellers gemäß der Erfindung.

Die Erfindung löst diese Aufgabe dadurch, daß, wie in Fig. 6 dargestellt, zwei im Gleichtakt angesteuerte und sich jeweils in den Ausgangszweigen befindliche Halbleiterschalter $HS_1$ und $HS_2$ und zwei Speicherdrosseln $L_1$ und $L_2$, oder eine Speicherdrossel mit zwei getrennten Wicklungen, potentialmäßig symmetrisch zu den Eingangsklemmen bzw. zu den Netzladekondensatoren eingesetzt werden. Hierdurch nimmt der Ausgangsmittelpunkt $P_{m2}$ das gleiche Potential gegen Erde an wie der Eingangsmittelpunkt $P_{m1}$, der gegen Erde HF-ripplespannungsfrei ist. Somit ist der Ausgangsmittelpunkt $P_{m2}$ gegen Erde ebenfalls HF-ripplespannungsfrei, wie auch die beiden Ausgangsklemmen $P_{21}$ und $P_{22}$, vorausgesetzt die Ausgangsspannung $U_2$ bildenden Teilspannungen $U_{21}$ und $U_{22}$ sind ihrerseits frei von HF-Ripplespannung, was durch entsprechende Dimensionierung von Speicherdrosseln und Ausgangskondensatoren bzw. durch weitere Siebglieder erreicht werden kann.

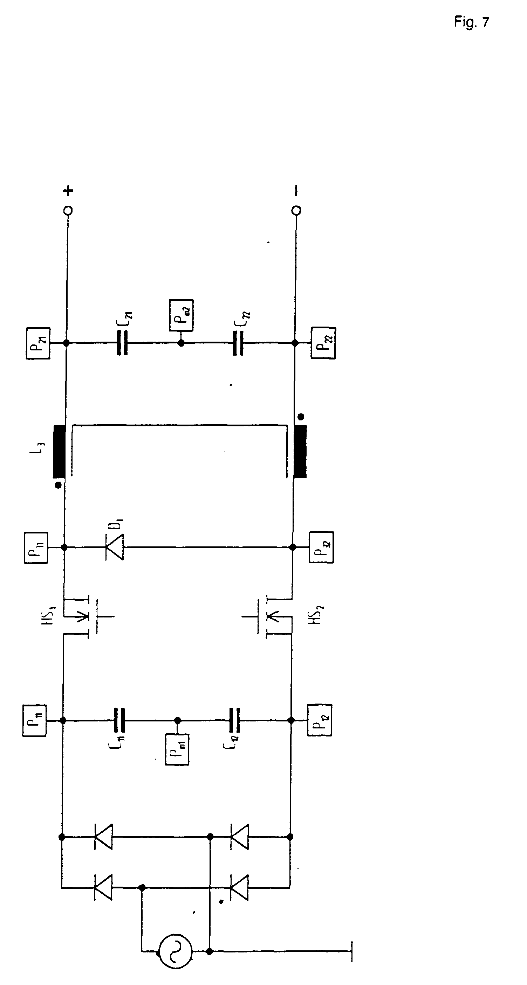

Weiterhin wird, wie in Fig. 6. dargestellt, durch den Einsatz von zwei jeweils in den Ausgangszweigen befindlichen Speicherdrosseln bzw., wie in Fig. 7 dargestellt, von einer Speicherdrossel mit zwei getrennten, jeweils in den Ausgangszweigen befindlichen Wicklungen erreicht, daß sich die aufgrund der Speicherdrossel-Wicklungskapazitäten gegen Erde in Verbindung mit dem an der Speicherdrossel mit der Taktfrequenz periodisch und mit hoher Flankensteilheit an den Punkten $P_{31}$ und $P_{32}$ auftretenden Rechteck-Spannungshub in Höhe der Netz-Scheitelspannung gegen Erde fließenden HF-Störströme aufheben.

Weiterhin wird erreicht, daß die zum Betrieb erforderliche und gewöhnlich auf Ausgangspotential liegende Steuer- und Regelschaltung, die üblicherweise über eine Potentialtrennung Bezug zu einer erdpotentialnahen Schnittstelle besitzt, gegen Erde frei von HF-Ripplespannung ist und somit keine die Steuer- und Regelschaltung ungünstig beeinflussenden HF-Störströme sowohl kapazitiv über die potentialgetrennte erdpotentialnahe Schnittstelle, als auch direkt über die Raumkapazitäten zur Erde fließen.

Weiterhin wird erreicht, daß sich die Ausgangsgleichspannung symmetrisch zum Eingangsmittelpunkt $P_{m1}$ verhält und somit die Ausgangsseite hinsichtlich der Isolation gegen Erde abhängig von der Höhe der Ausgangsspannung ausgelegt sein darf, wobei als auftretende Spannung gegen Erde die halbe Netz-Scheitelspannung zuzüglich der halben Ausgangsspannung anzusetzen ist.

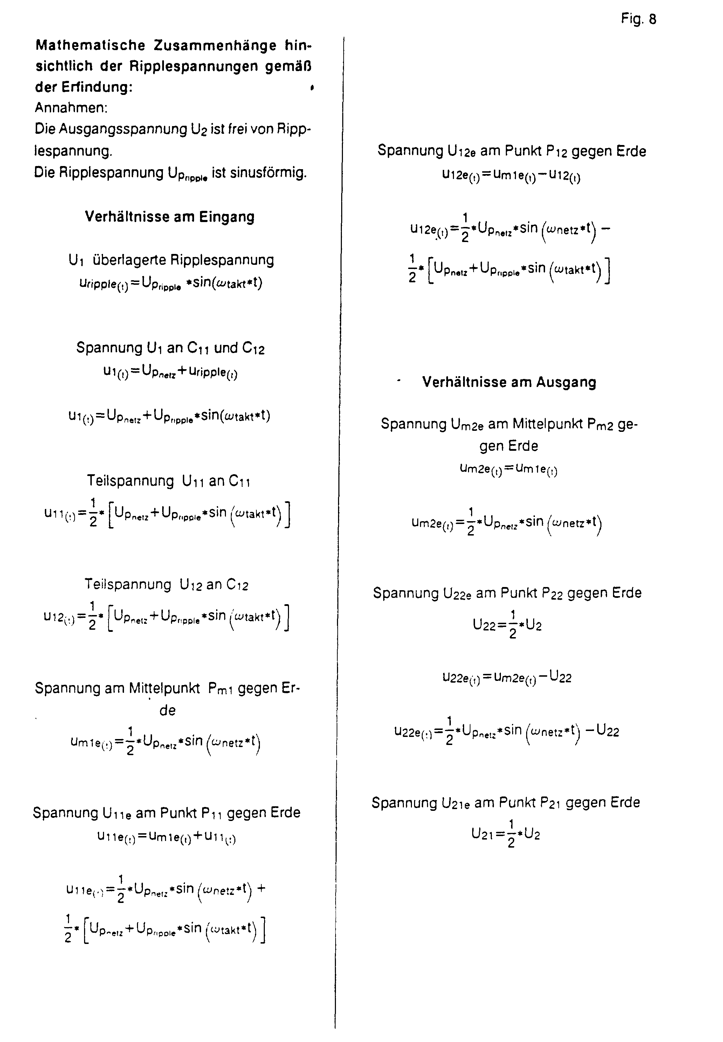

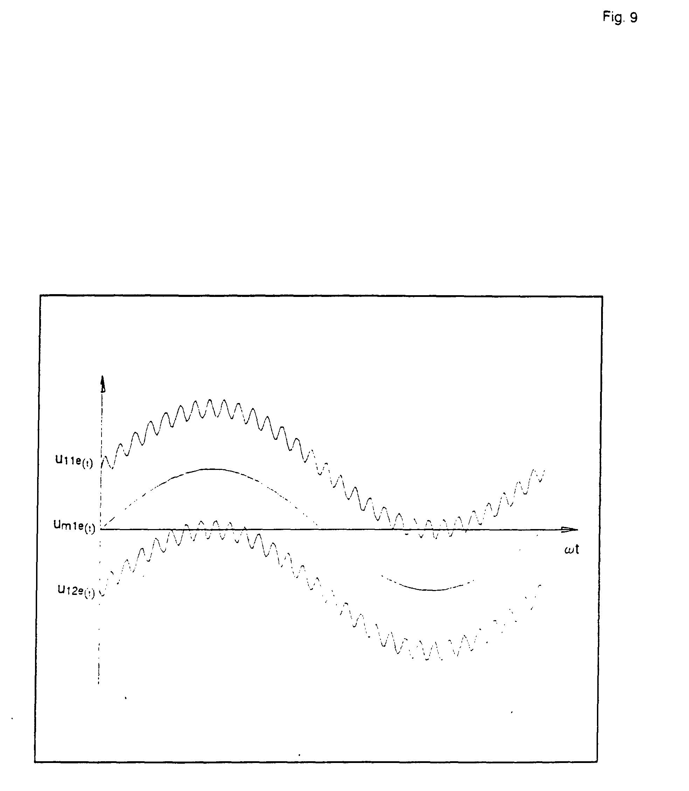

Fig. 6 zeigt eine Schaltung gemäß der Erfindung, Fig. 8 die mathematischen Zusammenhänge hinsichtlich der HF-Ripplespannungen mit Begriffsdefinitionen nach Fig. 5; Fig. 9 zeigt die Spannungsverhältnisse am Eingang des erfindungsgemäßen Tiefsetzstellers im Bezug zur Erde, die denen des Standes der Technik entsprechen.

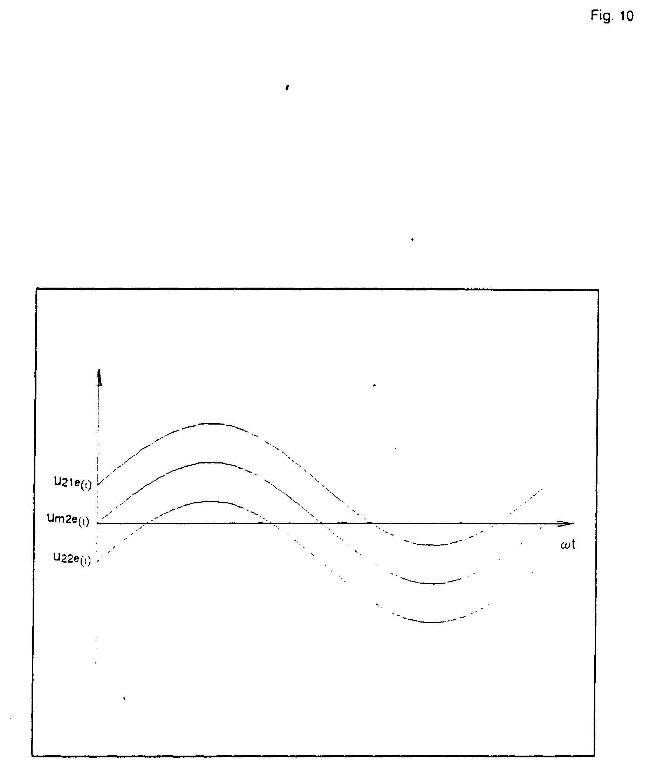

Fig. 10 zeigt die Spannungsverhältnisse am Ausgang des erfindungsgemäßen Tiefsetzstellers im Bezug zur Erde, die nicht mehr die HF-Ripplespannungen aufweisen.

Die Erfindung umfaßt weitere vorteilhafte Ausgestaltungen.

In Weiterbildung der Erfindung ist, wie in Fig. 11 dargestellt, der Mittelpunkt $P_{m1}$ zwischen den Netzladekondensatoren $C_{11}$ und $C_{12}$ mit dem Mittelpunkt $P_{m2}$ zwischen den Ausgangskondensatoren $C_{21}$ und $C_{22}$ verbunden. Dadurch wird bei wertmäßig gleichen Netzladekondensatoren $C_{11}$ und $C_{12}$ sowie bei wertmäßig gleichen Ausgangskondensatoren $C_{21}$ und $C_{22}$ eine Zwangssymmetrierung erreicht.

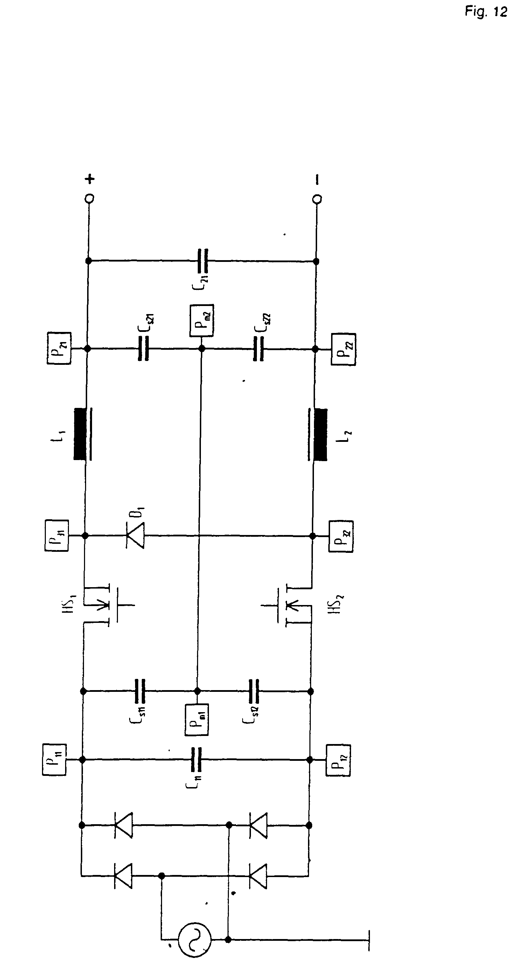

In einer weiteren Ausführungsform der Erfindung wird, wie in Fig. 12 dargestellt, eine Zwangssymmetrierung über die zum Netzladekondensator $C_{11}$ parallelgeschalteten Symmetrierkondensatoren $C_{S11}$ und $C_{S12}$, deren Mittelpunkt $P_{m1}$ mit dem Mittelpunkt $P_{m2}$ von zwei weiteren, zum Ausgangskondensator $C_{21}$ parallelgeschalteten Symmetrierkondensatoren $C_{S21}$ und $C_{s22}$ verbunden ist, erreicht.

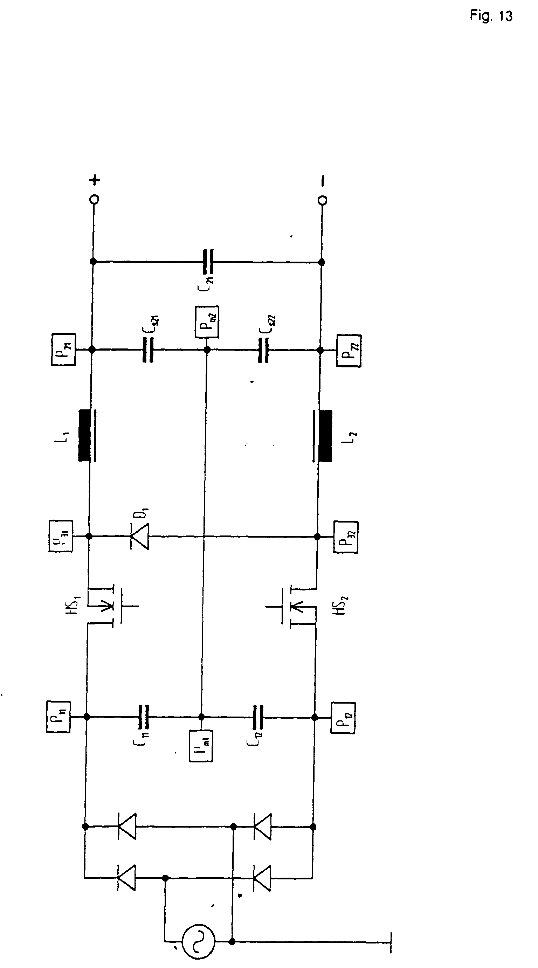

Alternativ hierzu kann, wie in Fig. 13 dargestellt, die Zwangssymmetrierung auch dadurch erreicht werden, daß lediglich die Ausgangsseite Symmetrierkondensatoren enthält, deren Mittelpunkt $P_{m2}$ mit dem Mittelpunkt $P_{m1}$ des in zwei gleich große Hälften $C_{11}$ und $C_{12}$ aufgeteilten Neztladekondensators verbunden ist.

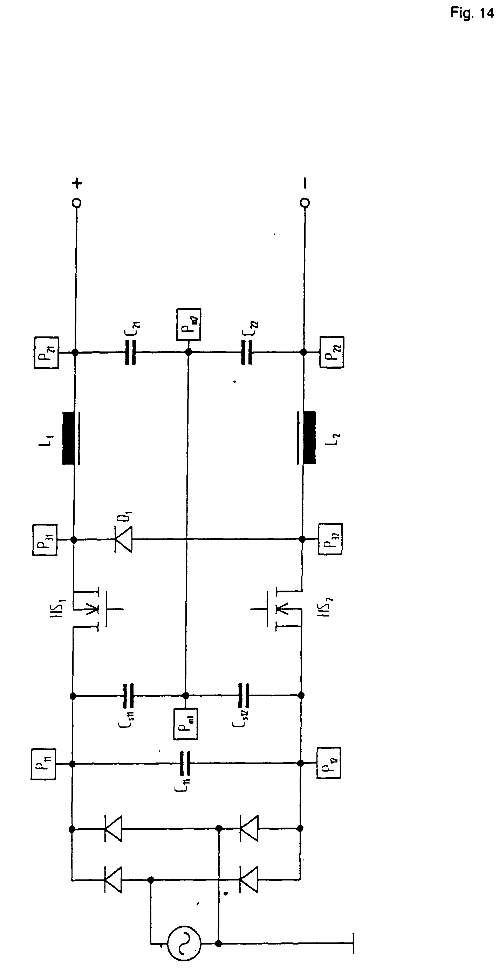

Ebenso kann, wie in Fig. 14 dargestellt, die Zwangssymmetrierung dadurch erreicht werden, daß lediglich die Eingangsseite Symmetrierkondensatoren enthält, deren Mittelpunkt $P_{m1}$ mit dem Mittelpunkt $P_{m2}$ des in zwei gleich große Hälften $C_{21}$ und $C_{22}$ aufgeteilten Ausgangskondensators verbunden ist.

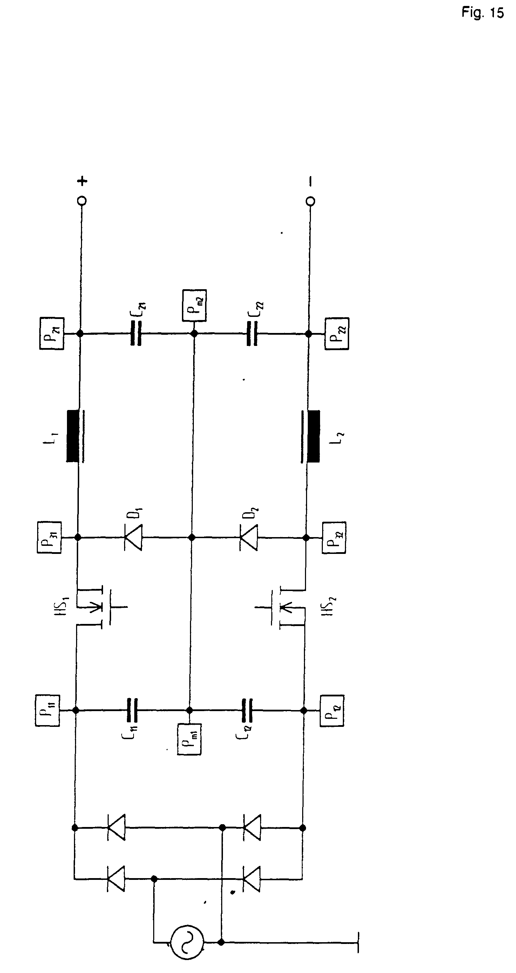

Zusätzlich kann zur weiteren Verbesserung gemäß Fig. 15 bei zwei in Reihe geschalteten Freilaufdioden $D_1$ und $D_2$, die Anode von $D_1$ und die Kathode von $D_2$ mit den Mittelpunkten $P_{m1}$ und $P_{m2}$ verbunden werden.

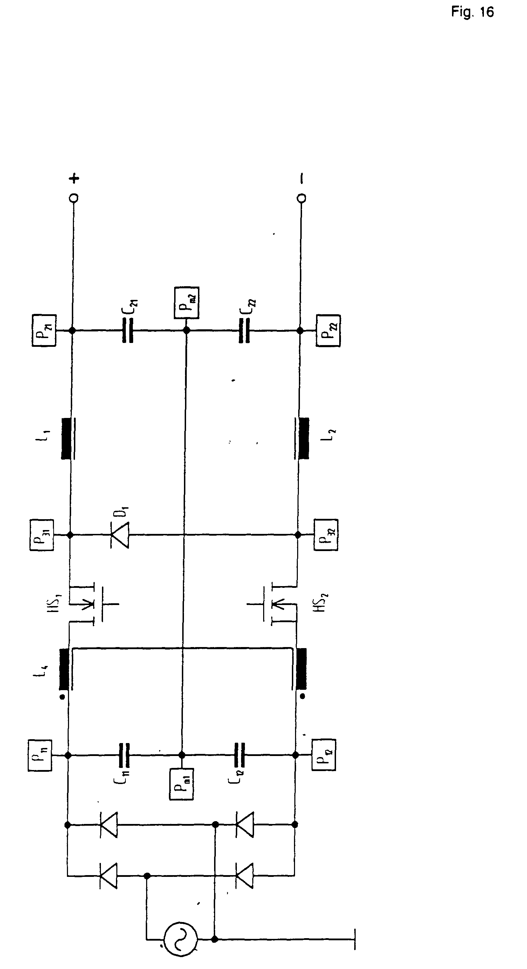

Fig. 16 zeigt eine weitere Ausführungsform eines erfindungsgemäßen Tiefsetzstellers, der im Eingangszweig unmittelbar vor den beiden Halbleiterschaltungen $HS_1$ und $HS_2$ eine stromkompensierte Entstördrossel $L_3$ enthält, die die aufgrund der Kapazitäten der Halbleiterschalter gegen Erde während der Umschaltphasen gegen Erde fließenden steilflankigen Umschaltströme reduziert.

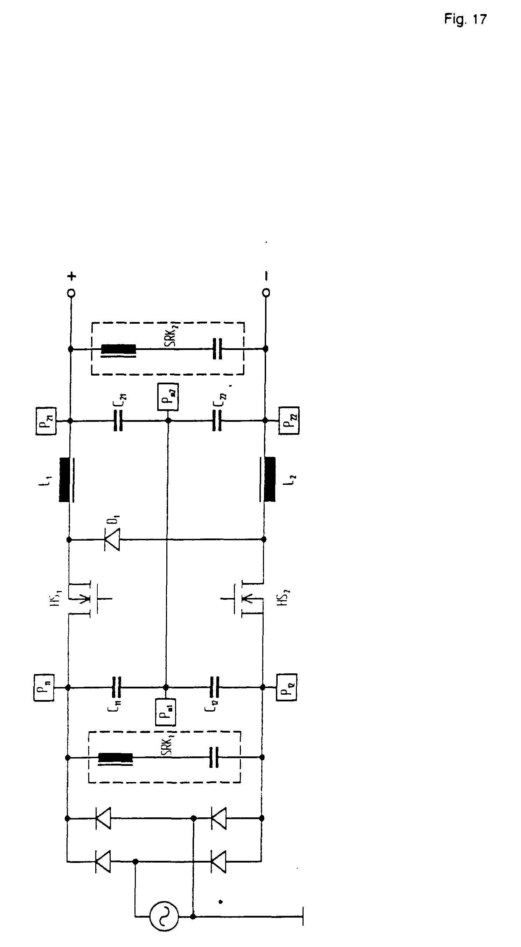

In Fig. 17 ist eine Ausführungsform gezeigt, die sowohl im Eingangskreis als auch im Ausgangskreis einen oder mehrere Serienresonanzkreise $SRK_1$ und $SRK_2$ zur weiteren Unterdrückung von symmetrischen HF-Ripplespannungen enthält, wobei diese auf die Grundwelle und/oder Harmonischen der Taktfrequenz abgestimmt sind.

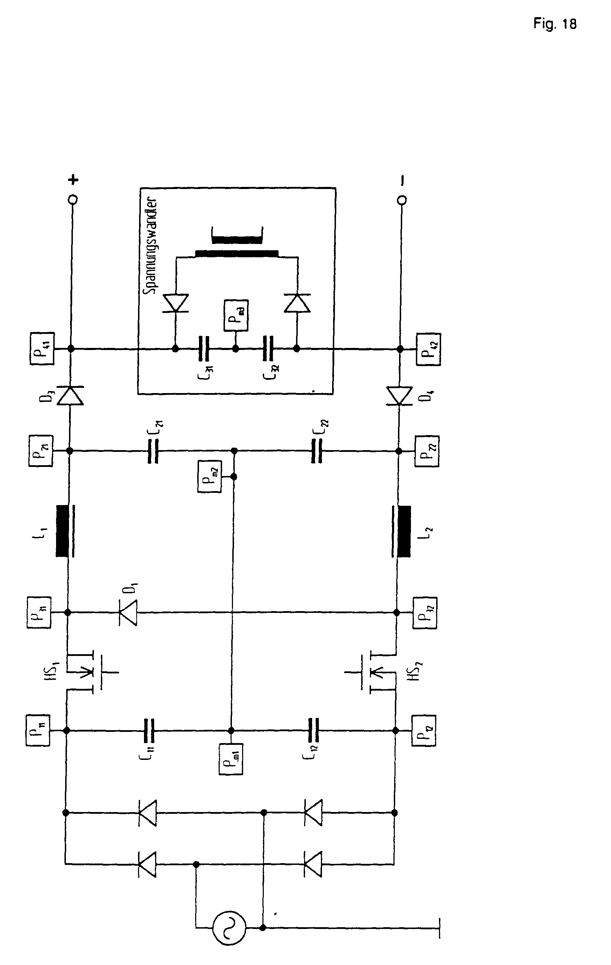

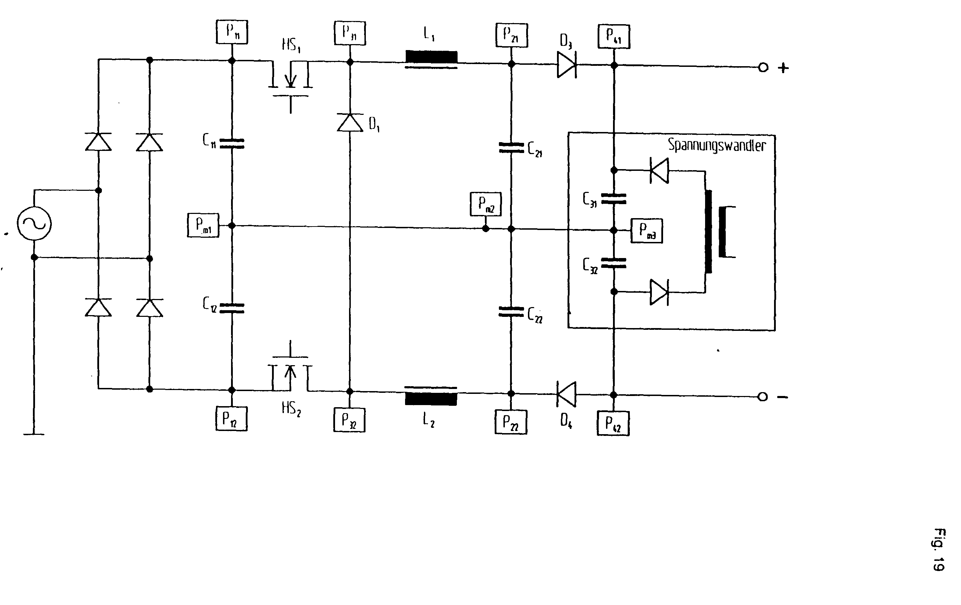

Die in Fig. 18 gezeigte Variante bezieht sich auf Anwendungen zum Betreiben von Entladungslampen, die im Zuge des Zündvorganges eine sogenannte Boost-Spannung bzw. Boost-Ladung benötigen. Mittels eines in Fig. 18 nicht dargestellten Zündgerätes wird in bekannter Weise die Entladungslampe mit einem kurzen Hochspannungsimpuls beaufschlagt, wodurch die Entladungsstrecke der Lampe geringfügig leitend wird und sich die energiereiche Boost-Spannung in der Lampe entlädt, wodurch diese soweit leitend wird, daß die Ausgangsspannung des Tiefsetzstellers zum Eingriff kommt. Über die Entkoppeldiode $D_3$ im positiven Ausgangszweig und $D_4$ im negativen Ausgangszweig wird die mittels eines Spannungswandlers generierte hohe Boost-Spannung symmetrisch zum Ausgangsmittelpunkt $P_{m2}$ aufgekoppelt. Dies hat gegenüber der in bekannter Weise nur über eine im positiven oder negativen Ausgangszweig liegenden Diode erfolgenden unsymmetrischen Aufkoppelung den Vorteil, daß während der sehr schnell vonstatten gehenden Entladung der hohen Boost-Spannung von ca. 1 KV bis 2 KV keinerlei HF-Störungen aufgrund der schlagartigen Potentialverschiebung gegen Erde auftreten. Zudem ergeben sich hinsichtlich der erforderlichen Isolation gegen Erde günstigere Werte gegenüber einer unsymmetrischen Aufkoppelung. Fig. 19 zeigt eine Variante, bei der zur weiteren Symmetrierung der Boost-Spannung zur Ausgangsspannung der Mittelpunkt $P_{m3}$ der Boost-Spannung mit dem Ausgangsmittelpunkt $P_{m2}$ verbunden ist.

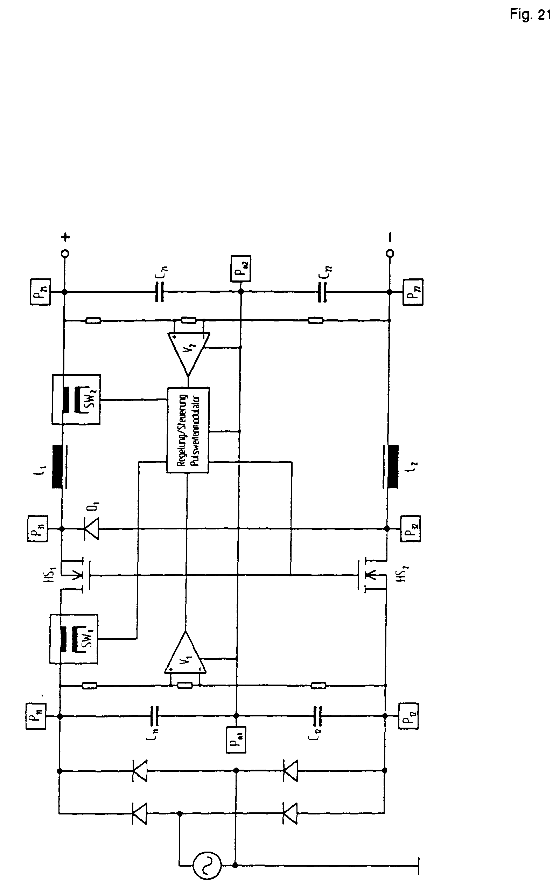

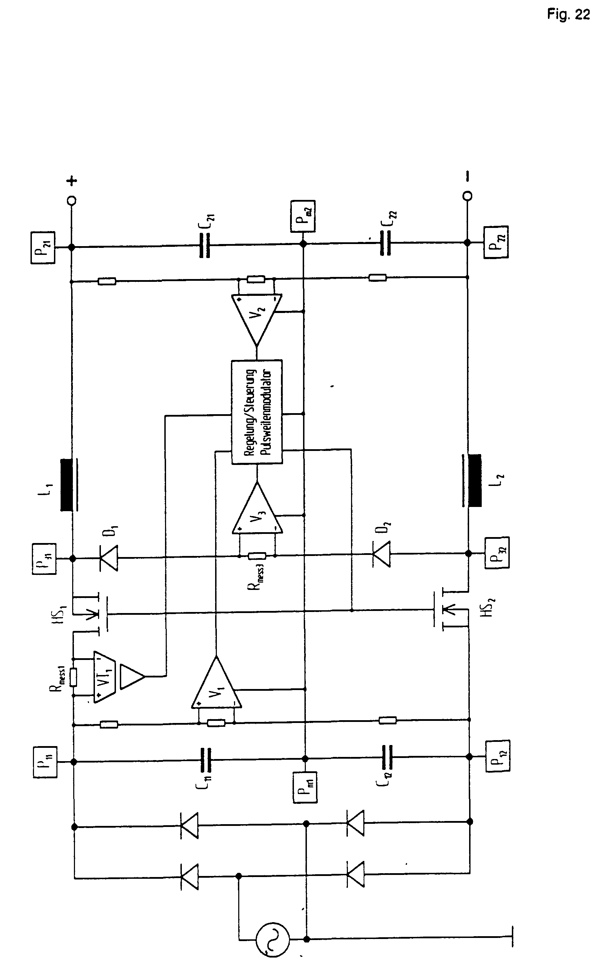

In den Fig. 21 und 22 sind Ausführungsbeispiele für eine Steuerung und Regelung des Tiefsetzstellers gezeigt, wobei der Bezugspunkt hierfür der Mittelpunkt $P_{m1}$ der Eingangsseite und/oder der Mittelpunkt $P_{m2}$ der Ausgangsseite ist. Zur ein- und/oder ausgangsseitigen Spannungserfassung werden die Differenzverstärker $V_1$ und $V_2$ eingesetzt, deren Ausgangssignal einer Steuerung zugeführt werden, die in bekannter Weise aus einem Pulsweitenmodulator besteht.

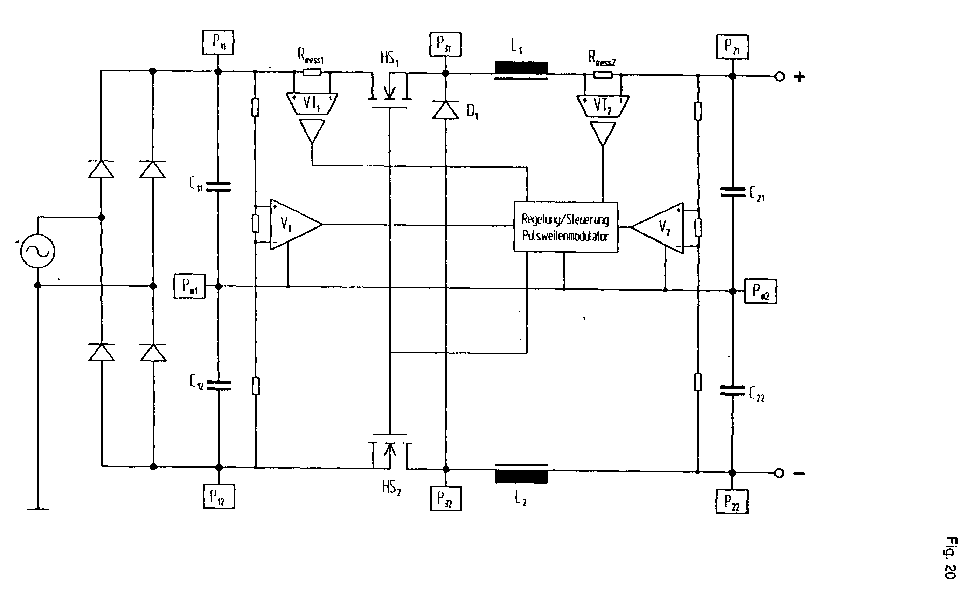

Fig. 20 zeigt eine ein- und ausgangsseitige Stromerfassung im jeweils positiven Zweig über einen Stromeßwiderstand $R_{mess1}$ und $R_{mess2}$ sowie einen Trennverstärker $VT_1$ und $VT_2$, deren Ausgangssignale der Steuerung zugeführt werden, Fig. 21 eine ein- und ausgangsseitige Stromerfassung im jeweils positiven Zweig über einen Stromwandler $SW_1$ und $SW_2$, deren Ausgangssignale der Steuerung zugeführt werden.

Eine weitere Variante ist in Fig. 22 dargestellt. Über einen Strommeßwiderstand $R_{mess3}$ und einen Differenzverstärker $V_3$ wird während der Sperrphase der Halbleiterschalter der in den beiden in Reihe geschalteten Freilaufdioden $D_1$ und $D_2$ fließende Strom, der ein Abbild des Ausgangsstromes ist, erfaßt und der Steuerung zugeführt.

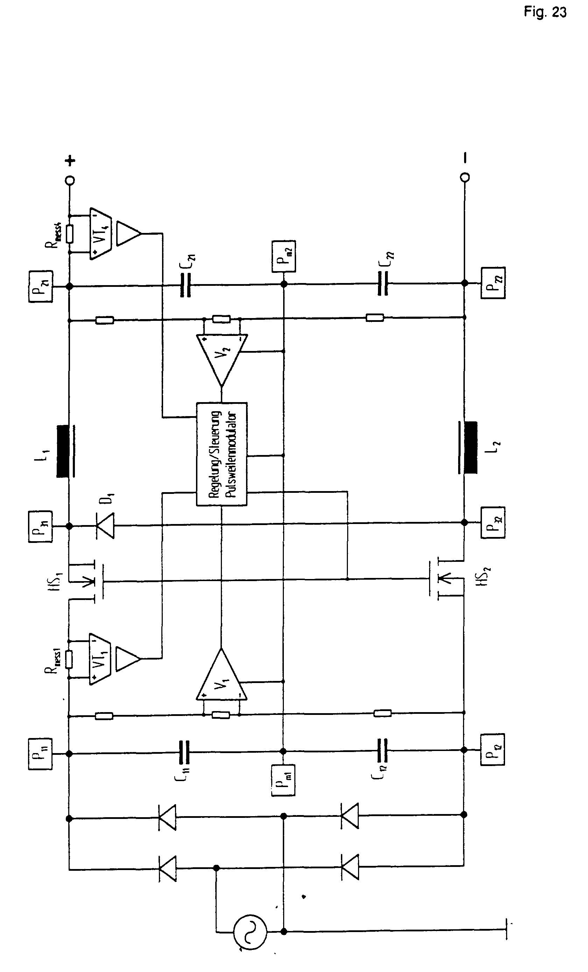

Fig. 23 zeigt eine Ausführung, bei der eine schnelle ausgangsseitige Stromerfassung unmittelbar in der Lastleitung über einen Strommeßwiderstand $R_{mess4}$ und einen Trennverstärker $VT_4$ erfolgt.

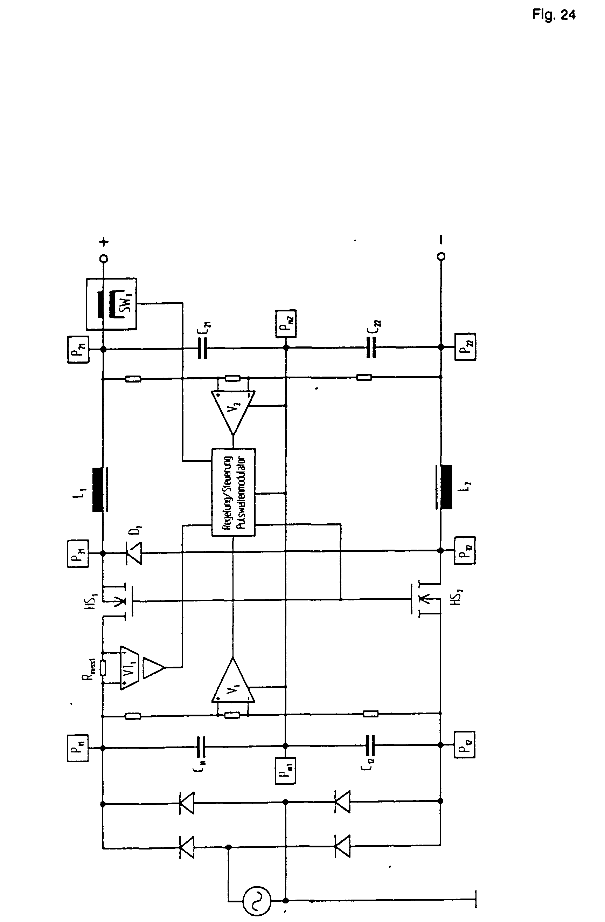

Fig. 24 zeigt eine diesbezügliche Ausführung mit einem Stromwandler $SW_3$.

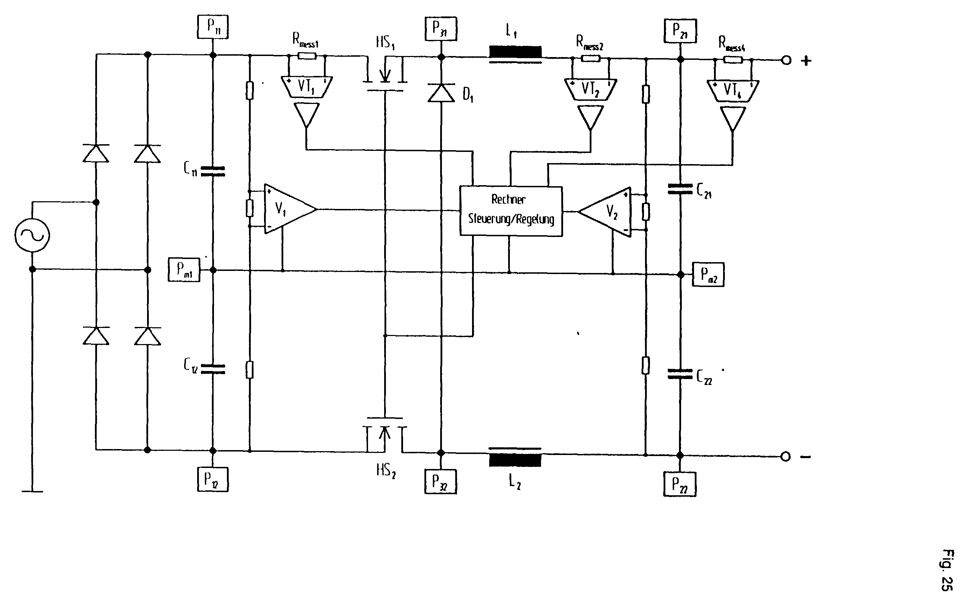

In Fig. 25 ist eine Ausführung gezeigt, die einen Analog- oder Digitalrechner enthält. Dies erweist sich insbesondere dann als vorteilhaft, wenn hinsichtlich der Konstanz und Netz-Ripplefreiheit der Ausgangsspannung oder des Ausgangsstromes sowie des dynamischen Verhaltens bei Laständerungen oder Änderungen der Vorgaben für Ausgangsspannung oder Ausgangsstrom hohe Anforderungen gestellt werden und diese von einem herkömmlichen Regler aufgrund der endlichen Regelgeschwindigkeit und Regelsteilheit in Zusammenhang mit dem Phasengang des Gesamtsystems alleine nicht erfüllt werden können.

Über die eingangsseitige Spannungserfassung mit dem Differenzverstärker $V_1$ und der ausgangsseitigen Spannungserfassung mit dem Differenzverstärker $V_2$ kann aus der Beziehung

$$\frac{t_{ein}}{t_{aus}} = \frac{U_2}{U_1 - U_2}$$

über den Rechner das an den Halbleiterschaltern einzustellende Tastverhältnis vorgestellt werden, so daß die an den Netzladekondensatoren $C_{11}$ und $C_{12}$ vorhandene Netz-Ripplespannung und Netzspannungsschwankungen sofort ausgeglichen werden, ohne die Reaktion des Reglers abwarten zu müssen. Ebenfalls kann bei einer gewünschten Änderung der Ausgangsspannung über den Rechner aus dem Eingangsspannungs-Istwert und dem vorgegebenen Ausgangsspannungs-Sollwert sofort das erforderliche Tastverhältnis bestimmt und vorgestellt werden.

Weiterhin kann bei einer gewünschten Änderung der Ausgangsspannung zur weiteren Verbesserung der Regeldynamik über den Rechner bei bekannter Größe der Ausgangskondensatoren $C_{21}$ und $C_{22}$ aus dem Eingangsspannungs-Istwert, aus dem Ausgangsspannungs-Istwert, einem vorgegebenen Ausgangsspannungs-Sollwert und einer vorgebenen Zeit bis zum Erreichen des Ausgangsspannungs-Sollwertes ein für diese Zeit einzustellendes Tastverhältnis bestimmt werden.

Ebenso kann bei einer gewünschten Änderung der Ausgangsspannung zur weiteren Verbesserung der Regeldynamik über den Rechner bei bekannter Größe der Ausgangskondensatoren $C_{21}$ und $C_{22}$ eine, für die gewünschte Zeit bis zum Erreichen des Ausgangsspannungs-Sollwertes erforderliche positive oder negative Stromdifferenz zu dem über den Strommeßwiderstand $R_{mess4}$ und dem Trennverstärker $VT_4$ erfaßten Laststrom errechnet und das zugehörige Tastverhältnis bestimmt werden, wobei die Stromdifferenz aus der Differenz des mittels des Strommeßwiderstandes $R_{mess2}$ und des Trennverstärkers $VT_2$ erfaßten Speicherdrossel-Stromes und des Laststromes überwacht werden kann.

Weiterhin kann über den Rechner bei Laständerungen die über den Strommeßwiderstand $R_{mess4}$ und den Trennverstärker $VT_4$ erfaßte Laststromänderung unmittelbar in Form einer zur Aufrechterhaltung dieses Laststromes erforderliche Änderung des Tastverhältnisses ermittelt und weitergegeben werden.

Bei Anwendungen des Tiefsetzstellers als Stromquelle kann bei einer gewünschten Änderung des Ausgangsstromes über den Rechner aus dem Eingangsspannungs-Istwert, aus dem Ausgangsstrom-Istwert und dem vorgegebenen Ausgangsstrom-Sollwert sofort das erforderliche Tastverhältnis bestimmt und vorgestellt werden.

Ebenso kann bei einer gewünschten Änderung des Ausgangsstromes zur weiteren Verbesserung der Regeldynamik über den Rechner bei bekannter Größe der Ausgangskondensatoren $C_{21}$ und $C_{22}$ eine für die gewünschte Zeit bis zum Erreichen des Ausgangsstroms-Sollwertes erforderliche positive oder negative Stromdifferenz zu dem über den Strommeßwiderstand $R_{mess4}$ und dem Trennverstärker $VT_4$ erfaßten Laststrom errechnet und das zugehörige Tastverhältnis bestimmt werden, wobei die Stromdifferenz aus der Differenz des mittels des Strommeßwiderstandes $R_{mess2}$ und des Trennverstärkers $VT_2$ erfaßten Speicherdrossel-Stromes und des Laststromes überwacht werden kann.

Weiterhin kann die bei schnellen Laständerungen aufgrund der endlichen Regelgeschwindigkeit vom eingestellten Stromsollwert auftretende dynamische Laststromabweichung über den Strommeßwiderstand $R_{mess4}$ und den Trennverstärker $VT_4$ erfaßt werden und zusammen mit der ebenfalls erfaßten Ausgangsspannung über den Rechner der Lastwert bestimmt und daraus zusammen mit dem erfaßten Wert der Eingangsspannung unmittelbar das erforderliche Tastverhältnis errechnet und weitergegeben werden.

Bei Anwendungen des Tiefsetzstellers als Leistungsquelle, bei der eine Last mit einer konstanten oder variablen Leistung beaufschlagt wird, kann ebenso wie bei den Anwendungen als Spannungs- oder Stromquelle aus den erfaßten Parametern wie Eingangsspannung, Eingangsstrom, Ausgangsspannung, Speicherdrossel-Strom und Laststrom über den Rechner ein sowohl statisch als auch dynamisch einzustellendes Tastverhältnis ermittelt werden.

Bei allen Anwendungen des Tiefsetzstellers mit linearer oder nichtlinearer und/oder komplexer Last kann zur Verbesserung der Regelcharakteristik durch den Rechner bei einem erstmaligen Aufschalten der Last über eine Meßroutine deren strom- und spannungsabhängiges, statisches, dynamisches und komplexes Verhalten innerhalb vorzugebender Grenzen von Strom und Spannung ermittelt, diese Parameter in einem Speicher abgelegt und diese bei einzustellenden Spannungs-, Strom- oder Leistungswerten bei der Ermittlung des erforderlichen Tastverhältnisses eingerechnet werden.

Schließlich können alle Parameter des Tiefsetzstellers, wie eingangs- und ausgangsspannungsabhängiger, stromabhängiger sowie temperaturabhängiger Wirkungsgrad, Innenwiderstand, Induktivität und stromabhängige Induktivität der Speicherdrossel sowie Kapazität der Ausgangskondensatoren fest in einem Speicher abgelegt sein und über den Rechner bei der Ermittlung des einzustellenden Tastverhältnisses Berücksichtigung finden. Zusätzlich können während des Betriebes verschiedene Parameter des Tiefsetzstellers, wie eingangs- und ausgangsspannungsabhängiger, stromabhängiger sowie temperaturabhängiger Wirkungsgrad im Speicher laufend aktualisiert werden.

## Patentansprüche

1. Tiefsetzsteller mit einem positiven und einem negativen Ausgang zur Erzeugung einer gegen Erde Gleichtakt-ripplefreien Spannung an den Ausgängen, wobei der Tiefsetzsteller aus einer Gleich- oder Wechselspannungsquelle gespeist wird und weiter aufweist:

   einen positiven und einem negativen Zweig, jeweils eine Speicherdrossel ($L_1$, $L_2$) und jeweils einen Halbleiterschalter ($HS_1$, $HS_2$) in dem positiven und in dem negativen Zweig, wobei die Halbleiterschalter ($HS_1$, $HS_2$) periodisch und im Gleichtakt zueinander geöffnet und geschlossen werden, und
   mindestens einen Eingangskondensator ($C_{11}$; $C_{12}$) und mindestens eine Freilaufdiode ($D_1$; $D_2$) zwischen dem positiven und dem negativen Zweig.

2. Tiefsetzsteller nach Anspruch 1, bei welchem die Speicherdrosseln ($L_1$, $L_2$) in einer Speicherdrossel ($L_3$) mit einem gemeinsamen Kern und zwei getrennten Wicklungen realisiert sind.

3. Tiefsetzsteller nach Anspruch 1, bei welchem die Speicherdrosseln ($L_1$, $L_2$) in einer Speicherdrossel ($L_3$) mit zwei getrennten bifilaren Wicklungen realisiert sind.

4. Tiefsetzsteller nach Anspruch 2, bei welchem die zwei getrennten Wicklungen wicklungstechnisch und mechanisch so gestaltet sind, daß sie sich hinsichtlich ihrer jeweiligen Kapazitäten an jeweiligen Anschlußpunkten ($P_{31}$, $P_{32}$) der Wicklungen gegen den gemeinsamen Kern oder gegen Erde gleich verhalten.

5. Tiefsetzsteller nach einem der Ansprüche 1 bis 4, welcher zwei Eingangskondensatoren ($C_{11}$, $C_{12}$), die in Reihe zueinander geschaltet sind und jeweils gleiche Kapazitäten aufweisen, und zwei Ausgangskondensatoren ($C_{21}$, $C_{22}$), die in Reihe zueinander geschaltet sind und jeweils gleiche Kapazitäten haben, aufweist.

6. Tiefsetzsteller nach einem der Ansprüche 1 bis 4, welcher parallel zu dem mindestens einen Eingangskondensator ($C_{11}$; $C_{12}$) eine Reihenschaltung zweier Symmetrierkondensatoren ($C_{S11}$, $C_{S12}$) und parallel zu dem mindestens einen Ausgangskondensator ($C_{21}$, $C_{22}$) eine Reihenschaltung zweier Symmetrierkondensatoren ($C_{S21}$, $C_{S22}$) aufweist, wobei die Mittelpunkte ($P_{m1}$, $P_{m2}$) der beiden Symmetrierkondensator-Reihenschaltungen miteinander verbunden sind.

7. Tiefsetzsteller nach einem der Ansprüche 1 bis 4, welcher zwei Eingangskondensatoren ($C_{11}$, $C_{12}$), die in Reihe zueinander geschaltet sind und jeweils gleiche Kapazitäten aufweisen, mindestens einen Ausgangskondensator ($C_{21}$; $C_{22}$) zwischen dem positiven und dem negativen Zweig und parallel zu dem mindestens einen Ausgangskondensator ($C_{21}$; $C_{22}$) eine Reihenschaltung zweier Symmetrierkondensatoren ($C_{S21}$, $C_{S22}$) aufweist.

8. Tiefsetzsteller nach einem der Ansprüche 1 bis 4, welcher parallel zu dem mindestens einen Eingangskondensator ($C_{11}$; $C_{12}$) eine Reihenschaltung zweier Symmetrierkondensatoren ($C_{S11}$, $C_{S12}$) mit jeweils gleicher Kapazität und eine Reihenschaltung zweier Ausgangskondensatoren ($C_{21}$, $C_{22}$) mit jeweils gleicher Kapazität aufweist, wobei die Mittelpunkte der beiden Kondensator-Reihenschaltungen miteinander verbunden sind.

9. Tiefsetzsteller nach einem der Ansprüche 5 bis 8, welcher zwei Freilaufdioden ($D_1$, $D_2$), die zwischen dem positiven und dem negativen Zweig in Reihe zueinander geschaltet sind, aufweist und wobei die Mittelpunkte der Kondensator-Reihenschaltungen miteinander und mit dem Mittelpunkt der Dioden-Reihenschaltung verbunden sind.

10. Tiefsetzsteller nach einem der Ansprüche 1 bis 9, welcher eine stromkompensierte Entstördrossel ($L_4$) aufweist, die unmittelbar vor den beiden Halbleiterschaltern angeordnet ist.

11. Tiefsetzsteller nach einem der Ansprüche 1 bis 10, welcher zur Unterdrückung von symmetrischen Ripple-Spannungen eingangsseitig und/oder ausgangsseitig mindestens einen auf die Grundwelle und/oder Harmonische der Taktfrequenz abgestimmten Serienresonanzkreis ($SRK_1$, $SRK_2$) aufweist.

12. Tiefsetzsteller nach einem der Ansprüche 5 bis 10, welcher im positiven und im negativen Zweig jeweils eine Entkoppeldiode ($D_3$, $D_4$) aufweist, über welche jeweils eine Boost-Spannung symmetrisch zum Mittelpunkt ($P_{m2}$) der Kondensator-Reihenschaltung am Ausgang aufgekoppelt ist.

13. Tiefsetzsteller nach Anspruch 12, bei welchem ein Mittelpunkt ($P_{m3}$) der Boost-Spannungseinrichtung mit dem Mittelpunkt ($P_{m2}$) der Ausgangskondensator-Reihenschaltung verbunden ist.

14. Tiefsetzsteller nach einem der Ansprüche 5 bis 13, welcher eine Steuereinrichtung aufweist, die als Bezugspunkte den Eingangskondensator-Reihenschaltungs-Mittelpunkt ($P_{m1}$) oder den Ausgangskondensator-Reihenschaltungs-Mittelpunkt ($P_{m2}$) besitzt.

15. Tiefsetzsteller nach Anspruch 14, bei welchem die Steuereinrichtung mindestens einen Differenzverstärker ($V_1$, $V_2$) zur Spannungserfassung aufweist.

16. Tiefsetzsteller nach Anspruch 14, welcher einen Trennverstärker ($VT_1$) mit einem Strommeßwiderstand ($R_{mess1}$) oder einen Stromwandler ($SW_1$) zur eingangsseitigen Stromerfassung im positiven oder negativen Zweig aufweist.

17. Tiefsetzsteller nach Anspruch 14, welcher zur ausgangsseitigen Speicherdrossel-Stromerfassung im positiven oder negativen Zweig einen Trennverstärker ($VT_2$) mit einem Strommeßwiderstand ($R_{mess2}$) oder einen Stromwandler ($SW_2$) aufweist.

18. Tiefsetzsteller nach Anspruch 14, welcher zur ausgangsseitigen Stromerfassung einen Differenzverstärker ($V_3$) mit einem Strommeßwiderstand ($R_{mess3}$), der zwischen den beiden Freilaufdioden ($D_1$, $D_2$) angeordnet ist, aufweist.

19. Tiefsetzsteller nach Anspruch 14, der zur ausgangseitigen Laststromerfassung einen Strommeßwiderstand ($R_{mess4}$) im positiven oder im negativen Zweig sowie einen Trennverstärker ($VT_4$) oder einen Stromwandler ($SW_3$) aufweist.

20. Tiefsetzsteller nach einem der Ansprüche 14 bis 19, bei welchem die Steuereinrichtung einen Analog- und/oder Digitalrechner aufweist, wobei aus einem Eingangsspannungs-Istwert, Ausgangsspannungs-Sollwert und Ausgangsspannungs-Istwert ein Tastverhältnis für die Halbleiterschalter ($HS_1$, $HS_2$) ermittelt wird.

21. Tiefsetzsteller nach Anspruch 20, bei welchem zusätzlich die Kapazität des mindestens einen Ausgangskondensators ($C_{21}$, $C_{22}$) sowie eine vorbestimmte Zeit bis zum Erreichen des Ausgangsspannungs-Sollwertes zur Bestimmung des Tastverhältnisses für die Halbleiterschalter ($HS_1$, $HS_2$) ermittelt wird.

22. Tiefsetzsteller nach Anspruch 19, bei welchem die Steuereinrichtung einen Analog- und/oder Digitalrechner aufweist, über den eine Stromdifferenz aus dem mittels des Strommeßwiderstandes ($R_{mess4}$) erfaßten Laststromes und dem mittels des Strommeßwiderstandes ($R_{mess2}$) erfaßten Speicherdrossel-Stromes errechnet wird.

23. Tiefsetzsteller nach Anspruch 20 oder 21, bei welchem das Tastverhältnis im Moment einer Laständerung aus dem Ausgangsspannungs-Istwert und einem Laststrom-Istwert ermittelt wird.

24. Tiefsetzsteller nach einem der Ansprüche 20 bis 23, welcher einen Speicher zur Speicherung von Wirkungsgraden, Innenwiderstand, Induktivität stromabhängiger Induktivität der Speicherdrosseln sowie Kapazität des mindestens einen Ausgangskondensators ($C_{21}$; $C_{22}$) aufweist.

25. Tiefsetzsteller nach Anspruch 24, bei welchem die im Speicher gespeicherten Werte laufend aktualisiert werden.

26. Tiefsetzsteller nach Anspruch 24, welcher einen weiteren Speicher aufweist, in welchem aktualisierte Werte gespeichert werden.

27. Tiefsetzsteller nach einem der Ansprüche 20 bis 26, bei welchem beim erstmaligen Beschalten einer Last deren statisches und dynamisches Verhalten innerhalb vorgebbarer Grenzen von Strom und Spannung mittels einer Stimulierung erfaßt und in einem Speicher abgelegt wird.

**Claims**

1. Step-down converter having a positive output and a negative output for generating at the outputs a voltage which is ripple-free in phase relative to earth, the step-down converter being supplied from a source of direct or alternating voltage and also having:

 a positive branch and a negative branch,
 a respective accumulator choke ($L_1$, $L_2$) and a respective semiconductor switch ($HS_1$, $HS_2$) in the positive branch and in the negative branch, the semiconductor switches ($HS_1$, $HS_2$) being opened and closed periodically and in phase with each other, and
 at least one input condenser ($C_{11}$; $C_{12}$) and at least one free-running diode ($D_1$; $D_2$) between the positive branch and the negative branch.

2. Step-down converter according to claim 1, in which the accumulator chokes ($L_1$, $L_2$) are achieved in one accumulator choke ($L_3$) having a common core and two separate windings.

3. Step-down converter according to claim 1, in which the accumulator chokes ($L_1$, $L_2$) are achieved in one accumulator choke ($L_3$) having two separate bifilar windings.

4. Step-down converter according to claim 2, in which the two separate windings are so configured, technically and mechanically, that they behave identically, in respect of their respective capacitances at respective connection points ($P_{31}$, $P_{32}$) of the windings, towards the common core or towards earth.

5. Step-down converter according to one of claims 1 to 4, which has two input condensers ($C_{11}$, $C_{12}$), which are connected in series with each other and which each have identical capacitances, and two output condensers ($C_{21}$, $C_{22}$) which are connected in series with each other and which each have identical capacitances.

6. Step-down converter according to one of claims 1 to 4, which has a series-connection between two balance condensers ($C_{S11}$, $C_{S12}$) parallel to at least one input condenser ($C_{11}$; $C_{12}$), and a series-connection between two balance condensers ($C_{S21}$, $C_{S22}$) parallel to at least one output condenser ($C_{21}$, $C_{22}$), the centres ($P_{m1}$, $P_{m2}$) of the two balance condenser series-connections being interconnected.

7. Step-down converter according to one of claims 1 to 4, which has two input condensers ($C_{11}$, $C_{12}$), which are connected in series with each other and which each have identical capacitances, at least one output condenser ($C_{21}$; $C_{22}$) between the positive branch and the negative branch and a series-connection between two balance condensers ($C_{S21}$, $C_{S22}$) parallel to at least one output condenser ($C_{21}$; $C_{22}$).

8. Step-down converter according to one of claims 1 to 4, which has, parallel to at least one input condenser ($C_{11}$; $C_{12}$), a series-connection between two balance condensers ($C_{S11}$, $C_{S12}$), each with a respective identical capacitance, and a series-connection between two output condensers ($C_{21}$, $C_{22}$), each with an identical capacitance, the centres of the two condenser series-connections being interconnected.

9. Step-down converter according to one of claims 5 to 8, which has two free-running diodes ($D_1$, $D_2$), which are connected in series with each other between the positive branch and the negative branch, and wherein the centres of the condenser series-connections are connected to each other and to the centre of the diode series-connection.

10. Step-down converter according to one of claims 1 to 9, which has a current-compensated suppressor choke ($L_4$), which is disposed directly upstream of the two semiconductor switches.

11. Step-down converter according to one of claims 1 to 10, which has, on the input side and/or on the output side, at least one seriesresonance circuit ($SRK_1$, $SRK_2$), adapted to the fundamental wave and/or harmonic of the timing frequency, to suppress symmetrical ripple voltages.

12. Step-down converter according to one of claims 5 to 10, which has a respective decoupling diode ($D_3$, $D_4$) in the positive branch and in the negative branch, via which diode a respective boost voltage is applied to the output symmetrically with the centre ($P_{m2}$) of the condenser series-connection.

13. Step-down converter according to claim 12, in which a centre ($P_{m3}$) of the boost voltage apparatus is connected to the centre ($P_{m2}$) of the output condenser series-connection.

14. Step-down converter according to one of claims 5 to 13, which has a control means which has, as reference points, the input condenser series-connection centre ($P_{m1}$) or the output condenser series-connection centre ($P_{m2}$).

15. Step-down converter according to claim 14, in which the control means has at least one sum-and-difference amplifier ($V_1$, $V_2$) to detect the voltage.

16. Step-down converter according to claim 14, which has an isolation amplifier ($VT_1$) with a current-measuring resistor ($R_{mess1}$) or a current transformer ($SW_1$) to detect current at the input end in the positive branch or in the negative branch.

17. Step-down converter according to claim 14, which has an isolation amplifier ($VT_2$) with a current-measuring resistor ($R_{mess2}$) or a current transformer ($SW_2$) to detect current at the output end of the accumulator choke in the positive branch or in the negative branch.

18. Step-down converter according to claim 14, which has a sum-and-difference amplifier ($V_3$) with a current-measuring resistor ($R_{mess3}$), which is disposed between the two free-running diodes ($D_1$, $D_2$), to detect current at the output end.

19. Step-down converter according to claim 14, which has a current-measuring resistor ($R_{mess4}$) in the positive branch or in the negative branch, as well as an isolation amplifier ($VT_4$) or a current transformer ($SW_3$), to detect load current at the output end.

20. Step-down converter according to one of claims 14 to 19, in which the control means has an analogue computer and/or a digital computer, a keying ratio for the semiconductor switches ($HS_1$, $HS_2$) being ascertained from an actual input voltage value, a desired output voltage value and an actual output voltage value.

21. Step-down converter according to claim 20, in which the capacitance of at least one output condenser ($C_{21}$, $C_{22}$), as well as a predetermined time until the desired output voltage value is reached, are additionally ascertained in order to determine the keying ratio for the semiconductor switches ($HS_1$, $HS_2$).

22. Step-down converter according to claim 19, in which the control means has an analogue computer and/or a digital computer, via which a current difference is calculated from the load current, detected by means of the current-measuring resistor ($R_{mess4}$), and the accumulator choke current detected by means of the current-measuring resistor ($R_{mess2}$).

23. Step-down converter according to claim 20 or 21, in which the keying ratio is ascertained at the moment of a load change from the actual output voltage value and an actual load current value.

24. Step-down converter according to one of claims 20 to 23, which has a storage unit for storing efficiencies, internal resistance, inductance and current-dependent inductance of the accumulator chokes, as well as the capacitance of at least one output condenser ($C_{21}$; $C_{22}$).

25. Step-down converter according to claim 24, in which the values, stored in the storage unit, are continuously updated.

26. Step-down converter according to claim 24, which has an additional storage unit, in which updated values are stored.

27. Step-down converter according to one of claims 20 to 26, in which, for the initial wiring of a load, its static and dynamic behaviour is detected within prescribable limits of current and voltage by means of a stimulation and deposited in a storage unit.

**Revendications**

1. Convertisseur abaisseur comportant une sortie positive et une sortie négative pour produire une tension, sans ondulation en phase par rapport à la terre, au niveau des sorties, le convertisseur abaisseur étant alimenté par une source de tension continue ou une tension alternative et comportant en outre:

une branche positive et une branche négative, respectivement une bobine d'accumulation ($L_1$, $L_2$) et
respectivement un interrupteur à semiconducteurs ($HS_1$, $HS_2$) dans la branche positive et dans la branche négative, les interrupteurs à semiconducteurs ($HS_1$, $HS_2$) étant ouverts et fermés périodiquement et d'une manière synchrone entre eux, et
au moins un condensateur d'entrée ($C_{11}$; $C_{12}$) et au moins une diode de roue libre ($D_1$; $D_2$) disposée entre la branche positive et la branche négative.

2. Convertisseur abaisseur selon la revendication 1, dans lequel les bobines d'accumulation ($L_1$, $L_2$) sont réalisées dans une bobine d'accumulation ($L_3$) possédant un noyau commun et deux enroulement séparés.

3. Convertisseur abaisseur selon la revendication 1, dans lequel les bobines d'accumulation ($L_1$, $L_2$) sont réalisées dans une bobine d'accumulation ($L_3$) comportant deux enroulements bifilaires séparés.

4. Convertisseur abaisseur selon la revendication 2, dans lequel est deux enroulements séparés sont agencés du point de vue de la technique de l'enroulement et mécaniquement de telle sorte qu'ils se comportent de la même manière, du point de vue de leurs capacités respectives au niveau des points respectifs de connexion ($P_{31}$, $P_{32}$) des enroulements, par rapport au noyau commun ou par rapport à la terre.

5. Convertisseur abaisseur selon l'une des revendications 1 à 4, qui comporte deux condensateurs d'entrée ($C_{11}$, $C_{12}$), qui sont branchés en série entre eux et possèdent des capacités respectivement identiques, les deux condensateurs de sortie ($C_{21}$, $C_{22}$), qui sont branchés en série entre eux et possèdent des capacités respectivement identiques.

6. Convertisseur abaisseur selon l'une des revendications 1 à 4, qui comporte, en parallèle avec le au moins un condensateur d'entrée ($C_{11}$; $C_{12}$), un circuit série formé de deux condensateurs de symétrisation ($C_{S11}$, $C_{S12}$), et parallèlement aux au moins deux condensateurs de sortie ($C_{21}$, $C_{22}$), un circuit série de deux condensateurs de symétrisation ($C_{S11}$, $C_{S12}$), les point médians ($P_{m1}$, $P_{m2}$) des deux circuits série de condensateurs de symétrisation étant reliés entre eux.

7. Convertisseur abaisseur selon l'une des revendications 1 à 4, qui comporte deux condensateurs d'entrée ($C_{11}$, $C_{12}$), qui sont branchés réciproquement en série et possèdent des capacités respectivement identiques, au moins un condensateur de sortie ($C_{21}$; $C_{22}$) situé entre la branche positive et la branche négative et en parallèle avec au moins un condensateur de sortie ($C_{21}$; $C_{22}$), un circuit série formé de deux condensateurs de symétrisation ($C_{S21}$, $C_{S22}$).

8. Convertisseur abaisseur selon l'une des revendications 1 à 4, qui comporte en parallèle avec au moins un condensateur d'entrée ($C_{11}$, $C_{12}$), un circuit série formé de deux condensateurs de symétrisation ($C_{S21}$, $C_{S22}$) comportant respectivement la même capacité, et un circuit série formé de deux condensateurs de sortie ($C_{21}$, $C_{22}$) possédant respectivement la même capacité, les points médians des deux circuits série des condensateurs étant reliés entre eux.

9. Convertisseur abaisseur selon l'une des revendications 5 à 8, qui comporte deux diodes de roue libre ($D_1$, $D_2$), qui sont branchées en série entre elles entre la branche positive et la branche négative, et dans lequel les point médians des circuits série formés par les condensateurs sont reliés entre eux et au point médian du circuit série formé de diodes.

10. Convertisseur abaisseur selon l'une des revendications 1 à 9, qui comporte une bobine d'antiparasitage ($L_4$) compensée en courant, qui est disposée directement en amont des deux interrupteurs à semiconducteurs.

11. Convertisseur abaisseur selon l'une des revendications 1 à 10, qui comporte, côté entrée ou côté sortie, pour la suppression de tensions symétriques d'ondulation, au moins un circuit résonnant série ($SRK_1$, $SRK_2$), qui est raccordé sur l'onde fondamentale et/ou des harmoniques de la fréquence de cadence.

12. Convertisseur abaisseur selon l'une des revendications 5 à 10, qui comporte dans la branche positive et dans la branche négative respectivement une diode de découplage ($D_3$, $D_4$), au moyen de laquelle respectivement une tension élévatrice est couplée symétriquement par rapport au point médian ($P_{m2}$) au circuit série formé de condensateurs, au niveau de la sortie.

13. Convertisseur abaisseur selon la revendication 12, dans lequel un point médian ($P_{m3}$) du dispositif produisant la tension élévatrice est relié au point médian ($P_{m2}$) du circuit série formé des condensateurs de sortie.

**14.** Convertisseur abaisseur selon l'une des revendications 5 à 13, qui comporte un dispositif de commande, qui possède, en tant que points de référence, le point médian ($P_{m1}$) du circuit série des condensateurs d'entrée ou le point médian ($P_{m2}$) du circuit série des condensateurs de sortie.

**15.** Convertisseur abaisseur selon la revendication 14, dans lequel le dispositif de commande comporte au moins un amplificateur différentiel ($V_1$, $V_2$) pour la détection de la tension.

**16.** Convertisseur abaisseur selon la revendication 14, qui comporte un amplificateur séparateur ($VT_1$) comportant une résistance de mesure de courant ($R_{mess1}$) ou un convertisseur de courant ($SW_1$) pour détecter le courant côté entrée dans la branche positive ou dans la branche négative.

**17.** Convertisseur abaisseur selon la revendication 14, qui pour la détection du courant de la bobine d'accumulation côté sortie comporte, dans la branche positive ou négative, un amplificateur séparateur ($VT_2$) comportant une résistance de mesure de courant ($R_{mess2}$) ou un convertisseur de courant ($SW_2$).

**18.** Convertisseur abaisseur selon la revendication 14, qui comporte pour la détection du courant côté sortie, un amplificateur différentiel ($V_3$) comportant une résistance de mesure de courant ($R_{mess3}$), qui est disposé entre les deux diodes de roue libre ($D_1$, $D_2$).

**19.** Convertisseur abaisseur selon la revendication 14, qui comporte, pour la détection du courant de charge côté sortie, une résistance de mesure de courant ($R_{mess4}$) dans la branche positive ou dans la branche négative ainsi qu'un amplificateur séparateur ($VT_4$) ou un convertisseur de courant ($SW_3$).

**20.** Convertisseur abaisseur selon l'une des revendications 14 à 19, dans lequel le dispositif de commande comporte un calculateur analogique et/ou numérique, un taux de marche pour les interrupteurs à semiconducteurs ($HS_1$, $HS_2$) étant déterminé à partir d'une valeur réelle de la tension d'entrée, d'une valeur de consigne de la tension de sortie et d'une valeur réelle de la tension de sortie.

**21.** Convertisseur abaisseur selon la revendication 20, dans lequel en outre la capacité du au moins un condensateur de sortie ($C_{21}$, $C_{22}$) ainsi qu'une durée prédéterminée jusqu'à ce que soit atteinte la valeur de consigne de la tension de sortie est déterminée pour la détermination du taux de marche des interrupteurs à semiconducteurs ($HS_1$, $HS_2$).

**22.** Convertisseur abaisseur selon la revendication 19, dans lequel le dispositif de commande comporte un calculateur analogique et/ou numérique, qui calcule une différence entre le courant de charge détecté au moyen de la résistance de mesure de courant ($R_{mess4}$) et le courant de la bobine d'accumulation, qui est détecté au moyen de la résistance de mesure ($R_{mess2}$).

**23.** Convertisseur abaisseur selon la revendication 20 ou 21, dans lequel le taux de marche au moment d'un changement de charge est déterminé à partir de la valeur réelle de la tension de sortie et d'une réelle du courant de charge.

**24.** Convertisseur abaisseur selon l'une des revendications 20 à 23, qui comporte une mémoire pour mémoriser des degrés d'action, une résistance interne, une inductance, qui dépend du courant des bobines d'accumulation ainsi qu'une capacité du au moins un condensateur de sortie ($C_{21}$; $C_{22}$).

**25.** Convertisseur abaisseur selon la revendication 24, dans lequel les valeurs mémorisées dans la mémoire sont actualisées en permanence.

**26.** Convertisseur abaisseur selon la revendication 24, qui comporte une autre mémoire, dans laquelle sont mémorisées des valeurs actualisées.

**27.** Convertisseur abaisseur selon l'une des revendications 20 à 26, dans lequel lors du premier raccordement d'une charge, le comportement statique et dynamique de cette charge est détecté à l'intérieur de limites pouvant être prédéterminées du courant et de la tension, au moyen d'une stimulation, et est mémorisé dans une mémoire.

Fig. 1

Fig. 2

Fig. 3

Fig. 4

**Mathematische Zusammenhänge hinsichtlich der Ripplespannungen nach dem Stand der Technik:**

Annahmen:

Die Ausgangsspannung $U_2$ ist frei von Ripplespannung.

Die Ripplespannung $U_{p_{ripple}}$ ist sinusförmig.

### Verhältnisse am Eingang

$U_1$ überlagerte Ripplespannung

$$u_{ripple(t)} = U_{p_{ripple}} * \sin(\omega_{takt} * t)$$

Spannung $U_1$ an $C_{11}$ und $C_{12}$

$$u_{1(t)} = U_{p_{netz}} + u_{ripple(t)}$$

$$u_{1(t)} = U_{p_{netz}} + U_{p_{ripple}} * \sin(\omega_{takt} * t)$$

Teilspannung $U_{11}$ an $C_{11}$

$$u_{11(t)} = \frac{1}{2} * \left[ U_{p_{netz}} + U_{p_{ripple}} * \sin\left(\omega_{takt} * t\right) \right]$$

Teilspannung $U_{12}$ an $C_{12}$

$$u_{12(t)} = \frac{1}{2} * \left[ U_{p_{netz}} + U_{p_{ripple}} * \sin\left(\omega_{takt} * t\right) \right]$$

Spannung am Mittelpunkt $P_{m1}$ gegen Erde

$$u_{m1e(t)} = \frac{1}{2} * U_{p_{netz}} * \sin\left(\omega_{netz} * t\right)$$

Spannung $U_{11e}$ am Punkt $P_{11}$ gegen Erde

$$u_{11e(t)} = u_{m1e(t)} + u_{11(t)}$$

$$u_{11e(t)} = \frac{1}{2} * U_{p_{netz}} * \sin\left(\omega_{netz} * t\right) + \frac{1}{2} * \left[ U_{p_{netz}} + U_{p_{ripple}} * \sin\left(\omega_{takt} * t\right) \right]$$

Spannung $U_{12e}$ am Punkt $P_{12}$ gegen Erde

$$u_{12e(t)} = u_{m1e(t)} - u_{12(t)}$$

$$u_{12e(t)} = \frac{1}{2} * U_{p_{netz}} * \sin\left(\omega_{netz} * t\right) - \frac{1}{2} * \left[ U_{p_{netz}} + U_{p_{ripple}} * \sin\left(\omega_{takt} * t\right) \right]$$

### Verhältnisse am Ausgang

Spannung $U_{22e}$ am Punkt $P_{22}$ gegen Erde

$$u_{22e(t)} = u_{12e(t)}$$

$$u_{22e(t)} = \frac{1}{2} * U_{p_{netz}} * \sin\left(\omega_{netz} * t\right) - \frac{1}{2} * \left[ U_{p_{netz}} + U_{p_{ripple}} * \sin\left(\omega_{takt} * t\right) \right]$$

Spannung $U_{21e}$ am Punkt $P_{21}$ gegen Erde

$$u_{21e(t)} = u_{22e(t)} + U_2$$

$$u_{21e(t)} = \frac{1}{2} * U_{p_{netz}} * \sin\left(\omega_{netz} * t\right) - \frac{1}{2} * \left[ U_{p_{netz}} + U_{p_{ripple}} * \sin\left(\omega_{takt} * t\right) \right] + U_2$$

Fig. 5

## Begriffsdefinitionen zu Fig. 4 und Fig. 8

$U_{p_{netz}}$ = Netz−Scheitelspannung mit $f_{netz}$

$U_1$ = Spannung an $C_{11}$ und $C_{12}$

$U_{11}$ = Teilspannung an $C_{11}$

$U_{12}$ = Teilspannung an $C_{12}$

$U_{11e}$ = Spannung am Punkt $P_{11}$ gegen Erde

$U_{12e}$ = Spannung am Punkt $P_{12}$ gegen Erde

$U_{m1e}$ = Spannung am Mittelpunkt $P_{m1}$ gegen Erde

$U_2$ = Spannung an $C_{21}$ und $C_{22}$

$U_{21}$ = Teilspannung an $C_{21}$

$U_{22}$ = Teilspannung an $C_{22}$

$U_{21e}$ = Spannung am Punkt $P_{21}$ gegen Erde

$U_{22e}$ = Spannung am Punkt $P_{22}$ gegen Erde

$U_{m2e}$ = Spannung am Mittelpunkt $P_{m2}$ gegen Erde

$U_{p_{ripple}}$ = Ripple−Scheitelspannung mit $f_{takt}$

$f_{netz}$ = Netzfrequenz

$f_{takt}$ = Taktfrequenz und Störfrequenz

$\omega_{netz} = 2 * \pi * f_{netz}$

$\omega_{takt} = 2 * \pi * f_{takt}$

$t_{ein}$ = Einschaltzeit

$t_{aus}$ = Ausschaltzeit

Fig. 6

Fig. 7

Fig. 8

**Mathematische Zusammenhänge hinsichtlich der Ripplespannungen gemäß der Erfindung:**

Annahmen:

Die Ausgangsspannung $U_2$ ist frei von Ripplespannung.

Die Ripplespannung $U_{p_{ripple}}$ ist sinusförmig.

### Verhältnisse am Eingang

$U_1$ überlagerte Ripplespannung

$$U_{ripple(t)} = U_{p_{ripple}} * \sin(\omega_{takt} * t)$$

Spannung $U_1$ an $C_{11}$ und $C_{12}$

$$U_{1(t)} = U_{p_{netz}} + U_{ripple(t)}$$

$$U_{1(t)} = U_{p_{netz}} + U_{p_{ripple}} * \sin(\omega_{takt} * t)$$

Teilspannung $U_{11}$ an $C_{11}$

$$U_{11(t)} = \frac{1}{2} * \left[ U_{p_{netz}} + U_{p_{ripple}} * \sin\left(\omega_{takt} * t\right) \right]$$

Teilspannung $U_{12}$ an $C_{12}$

$$U_{12(t)} = \frac{1}{2} * \left[ U_{p_{netz}} + U_{p_{ripple}} * \sin\left(\omega_{takt} * t\right) \right]$$

Spannung am Mittelpunkt $P_{m1}$ gegen Erde

$$U_{m1e(t)} = \frac{1}{2} * U_{p_{netz}} * \sin\left(\omega_{netz} * t\right)$$

Spannung $U_{11e}$ am Punkt $P_{11}$ gegen Erde

$$U_{11e(t)} = U_{m1e(t)} + U_{11(t)}$$

$$U_{11e(t)} = \frac{1}{2} * U_{p_{netz}} * \sin\left(\omega_{netz} * t\right) + \frac{1}{2} * \left[ U_{p_{netz}} + U_{p_{ripple}} * \sin\left(\omega_{takt} * t\right) \right]$$

Spannung $U_{12e}$ am Punkt $P_{12}$ gegen Erde

$$U_{12e(t)} = U_{m1e(t)} - U_{12(t)}$$

$$U_{12e(t)} = \frac{1}{2} * U_{p_{netz}} * \sin\left(\omega_{netz} * t\right) - \frac{1}{2} * \left[ U_{p_{netz}} + U_{p_{ripple}} * \sin\left(\omega_{takt} * t\right) \right]$$

### Verhältnisse am Ausgang

Spannung $U_{m2e}$ am Mittelpunkt $P_{m2}$ gegen Erde

$$U_{m2e(t)} = U_{m1e(t)}$$

$$U_{m2e(t)} = \frac{1}{2} * U_{p_{netz}} * \sin\left(\omega_{netz} * t\right)$$

Spannung $U_{22e}$ am Punkt $P_{22}$ gegen Erde

$$U_{22} = \frac{1}{2} * U_2$$

$$U_{22e(t)} = U_{m2e(t)} - U_{22}$$

$$U_{22e(t)} = \frac{1}{2} * U_{p_{netz}} * \sin\left(\omega_{netz} * t\right) - U_{22}$$

Spannung $U_{21e}$ am Punkt $P_{21}$ gegen Erde

$$U_{21} = \frac{1}{2} * U_2$$

Fig. 9

$U_{11e(t)}$

$U_{m1e(t)}$

$U_{12e(t)}$

$\omega t$

Fig. 10

Fig. 11

Fig. 12

Fig. 13

Fig. 14

Fig. 15

26

Fig. 16

Fig. 17

EP 0 852 422 B1

Fig. 18

Fig. 19

Fig. 20

Fig. 21

**Fig. 22**

Fig. 23

Fig. 24

Fig. 25

EP 0 852 422 B1